(19) Europäisches Patentamt
European Patent Office
Office européen des brevets

(11) **EP 3 297 193 A1**

(12) **EUROPEAN PATENT APPLICATION**
published in accordance with Art. 153(4) EPC

(43) Date of publication:
21.03.2018 Bulletin 2018/12

(51) Int Cl.:
*H04L 1/00* (2006.01)    *H04L 1/18* (2006.01)

(21) Application number: 16795698.6

(22) Date of filing: 24.02.2016

(86) International application number:
PCT/CN2016/074478

(87) International publication number:
WO 2016/184211 (24.11.2016 Gazette 2016/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 15.05.2015 CN 201510250573

(71) Applicant: ZTE Corporation
Shenzhen, Guangdong 518057 (CN)

(72) Inventors:
• LIANG, Chunli
  Shenzhen
  Guangdong 518057 (CN)
• DAI, Bo
  Shenzhen
  Guangdong 518057 (CN)
• YANG, Weiwei
  Shenzhen
  Guangdong 518057 (CN)

(74) Representative: Lavoix
Bayerstrasse 83
80335 München (DE)

(54) **METHOD AND APPARATUS FOR SENDING UPLINK CONTROL INFORMATION**

(57) Provided are a method and apparatus for sending uplink control information. The method comprises: a terminal receiving downlink control information (DCI) sent by a base station, wherein the DCI comprises at least one of the following: a related first control domain for indicating downlink scheduling, a second control domain for indicating that the terminal determines an HARQ-ACK feedback mode and a third control domain for indicating a PUCCH resource used by the terminal when the terminal determines to feed back an HARQ-ACK; the terminal determining related parameter information required when the terminal feeds back HARQ-ACK information according to the downlink control information, wherein the related parameter information comprises: the number of HARQ-ACK bits, a PUCCH format of the HARQ-ACK and the PUCCH resource corresponding to the PUCCH format; and the terminal sending the HARQ-ACK information to the base station. The present invention solves the problem of how a terminal determines a PUCCH format of sending an HARQ-ACK when the PUCCH format is newly introduced.

A terminal receives DCI sent by a base station — S402

The terminal determines, according to downlink control information, related parameter information requried by the terminal when the terminal feeds back an HARQ-ACK — S404

The terminal sends the HARQ-ACK information to the base station — S406

**FIG. 4**

**Description**

**TECHNICAL FIELD**

The invention relates to the field of communications, and in particular to a method and apparatus for sending uplink control information.

**BACKGROUND**

In a Long Term Evolution (LTE) system, the uplink channel of a terminal includes: a Physical Uplink Shared Channel (PUSCH) a Physical Uplink Control Channel (PUCCH) and a Physical Random Access Channel (PRACH); data information, a Scheduling Request (SR), a Hybrid Automatic Repeat request Acknowledgement (HARQ-ACK) and Channel State Information (CSI) may be transmitted in the PUSCH, and an SR, an HARQ-ACK and CSI may be transmitted in the PUCCH, wherein the HARQ-ACK is a response message sent to a Physical Downlink Shared Channel (PDSCH) or a Physical Downlink Control Channel (PDCCH)/Enhanced Physical Downlink Control Channel (EPDCCH) representing the release of a Semi-Persistent Scheduling (SPS).

To meet the requirements of the International Telecommunication Union-Advanced (ITU-Advanced), Long Term Evolution Advanced (LTE-A) system, as a standard for evolution of LTE, is required to support a wider system bandwidth (up to 100MHz) and backward compatible to LTE-related standards. On the basis of related LTE systems, the bandwidths of LTE systems can be merged to get a higher bandwidth, this technology is called Carrier Aggregation (CA), by means of which the spectral efficiency of an IMT-Advance system can be improved, the shortage of spectrum resources can be relieved, and the utilization of spectrum resources is consequentially optimized.

In a system in which CA is introduced, a carrier subjected to aggregation is referred to as a Component Carrier (CC) or Serving Cell. Meanwhile, the concepts of a Primary Component Carrier/Cell (PCC/PCell) and a Secondary Component Carrier/Cell (SCC/SCell) have also been put forward, a system in which CA occurs at least includes a primary serving cell and a secondary serving cell, wherein the primary serving cell is always in an activated state.

In the conventional CA system, uplink control information, including SR, HARQ-ACK and periodic CSI, can only be sent on the PUCCH of a Pcell if no PUSCH is transmitted. Meanwhile, a plurality of PUCCH formats are defined by protocols to bear different uplink control information in different scenarios. These PUCCH formats include:

PUCCH format 1: bear SR;

PUCCH format 1a/1b: bear 1/2 bit of HARQ-ACK or 1/2 bit of HARQ-ACK and SR;

PUCCH format 2a/2b: bear 1/2 bit of HARQ-ACK and periodic CSI;

PUCCH format 2: bear periodic CSI or periodic CSI and HARQ-ACK; and

PUCCH format 3: bear HARQ-ACK or HARQ-ACK and SR or HARQ-ACK and CSI or HARQ-ACK, SR and CSI. PUCCH format 3 itself can only support up to 22 bits, but it is regulated by related protocols that PUCCH format 3 can bear at most 20 bits of HARQ-ACK or 20 bits of HARQ-ACK and 1 bit of SR or 10 bits of HARQ and 11 bits of CSI and 1 bit of SR.

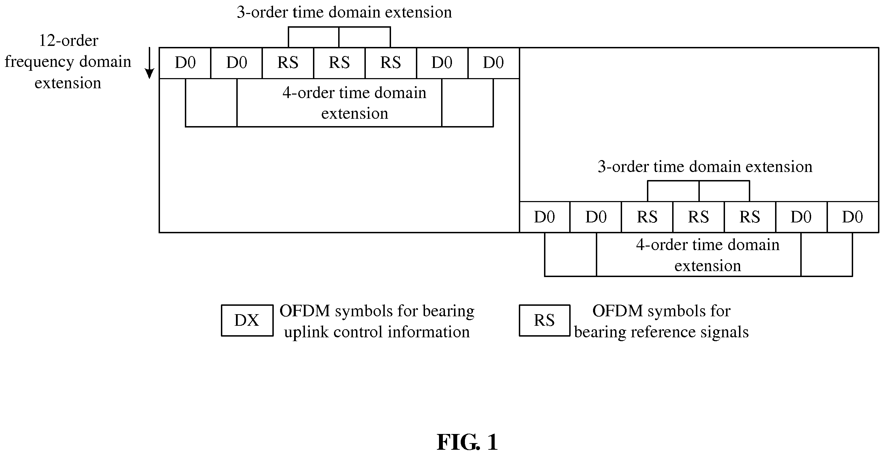

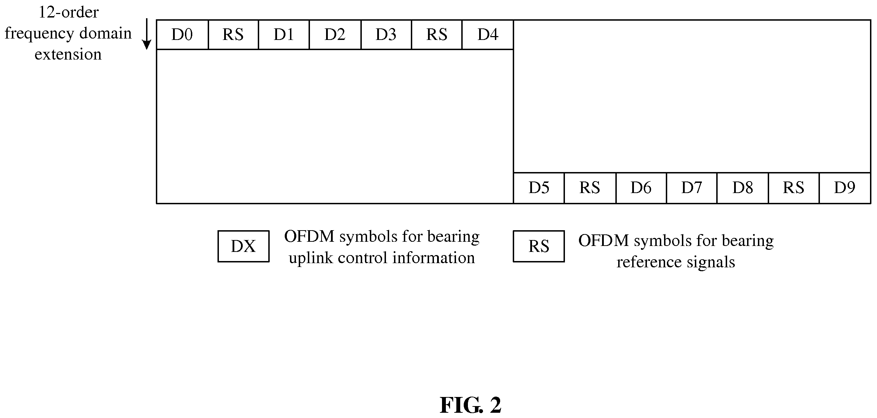

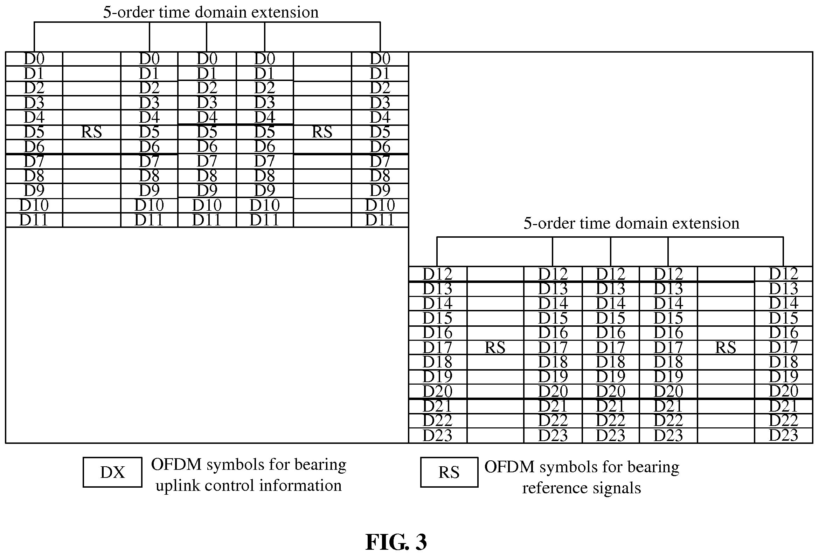

The numbers 1, 2 and 3 included in PUCCH formats 1, 2 and 3 are used to distinguish among these three different channel formats, a channel format refers here to the position of a reference signal and a channelization process, and the letters a and b included in these PUCCH formats represent the adoption of BPSK and QPSK, respectively. FIG. 1 is a schematic diagram illustrating the time-frequency structure of PUCCH format 1/1a/1b according to the conventional art, FIG. 2 is a schematic diagram illustrating the time-frequency structure of PUCCH format 2 according to the conventional art, FIG. 3 is a schematic diagram illustrating the time-frequency structure of PUCCH format 3 according to the conventional art, and these three different PUCCH formats are shown in FIG. 1-FIG. 3.

In consideration of a problem that related PUCCH format 3 cannot bear the HARQ-ACK bits needed to be sent because the HARQ-ACK bits needed to be sent will be far beyond 10 or 20 when the CA of at most 32 serving cells can be supported in the successor version, a conclusion is currently reached that at least one new kind of physical uplink control channel should be introduced to bear more HARQ-ACKs, this introduction of at least one new kind of physical uplink control channel can be called PUCCH format 4. If at least one new kind of physical uplink control channel is subsequently introduced, then the new kind of physical uplink control channel can be distinguished using PUCCH format 4a, 4b or the like. Therefore, there are a plurality of PUCCH formats, including related PUCCH format 1a/1b/3, new introduced PUCCH format 4, that support feedback of an HARQ-ACK, how a terminal can determine a PUCCH format for sending an HARQ-ACK has become a problem which needs to be solved urgently. In a case where a new PUCCH format is used to send an HARQ-ACK, how to determine new PUCCH format resources also becomes a problem which needs to be promptly settled.

No effective solutions have been proposed to address the problem existing in the conventional art as to how can a terminal determine a PUCCH format for sending an HARQ-ACK when a new PUCCH format is introduced.

## SUMMARY

The main objective of the invention is to provide a method and apparatus for sending downlink control information to at least address the problem existing in the conventional art as to how can a terminal determine a PUCCH format for sending an HARQ-ACK when a new PUCCH format is introduced.

In accordance with an aspect of the invention, a method for sending uplink control information is provided, including that: a terminal receives the Downlink Control Information (DCI) sent by a base station, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; the terminal determines, according to the downlink control information, related parameter information required by the terminal when the terminal feeds back HARQ-ACK information, wherein the related parameter information includes: the number of HARQ-ACK bits, the PUCCH format of an HARQ-ACK and a PUCCH resource corresponding to the PUCCH format; and the terminal sends the HARQ-ACK information to the base station.

Optionally, the PUCCH format includes a first preset PUCCH format and a second preset PUCCH format.

Optionally, for a Frequency Division Duplexing (FDD) system, the first control field is a Downlink Assignment Indicator (DAI) control field newly added in the control information, wherein the DAI control field is used to indicate the number of the PDCCHs/EPDCCHs with assigned PDSCH transmission(s) and PDCCHs/EPDCCHs indicating downlink SPS release which are already sent by the base station according to a first preset order ; and for a Time Division Duplexing (TDD) system, the first control field is a DAI control field which is used to indicate the number of the PDCCHs/EPDCCHs number of PDCCH/EPDCCH (s) with assigned PDSCH transmission(s) and PDCCHs/EPDCCHs indicating downlink SPS release which are already sent by the base station according to a second preset order.

Optionally, the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine the PUCCH format used by the terminal when the terminal feeds back the HARQ-ACK.

Optionally, in a case when the second control field is used to indicate the number of HARQ-ACKs required to be fed back by the terminal, the method further includes that: the terminal determines the number of HARQ-ACKs required to be fed back by the terminal according to the maximum value of the received DAIs or the number of the PDSCHs/(E)PDCCHs.

Optionally, the terminal and the base station agree that the second control field is a control field newly added in the DCI, the second control field is used to indicate a PUCCH format used by the terminal when the terminal feeds back an HARQ-ACK, and the DCI received by the terminal includes: the first control field, the second control field and the third control field, then the method further includes that: the terminal determines a PUCCH format used for feeding back an HARQ-ACK according to the second control field and determines, according to the PUCCH format, the number of HARQ-ACK bits required to be fed back as a maximum number of bits that can be supported by the PUCCH format; the terminal determines a PUCCH resource corresponding to the PUCCH format according to the third control field; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the PUCCH format.

Optionally, the terminal and the base station agree that the second control field is a control field newly added in the DCI and the second control field indicates the number of HARQ-ACKs required to be fed back by the terminal, when the DCI received by the terminal includes: the first control field, the second control field and the third control field, the method further includes that: the terminal determines, according to the second control field, the number of HARQ-ACK bits required to be fed back, and determines a PUCCH format that can carry the determined number of HARQ-ACK bits according to the determined number of HARQ-ACK bits; the terminal determines, according to the third control field, a PUCCH resource corresponding to the PUCCH format, the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the PUCCH format.

Optionally, the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the DCI received by the terminal includes: the first control field, the second control field and the third control field, the method further includes that: the terminal determines a PUCCH format used for feeding back an HARQ-ACK according to a TPC command control field of DCI of which the value of a DAI is greater than K and the value of the DAI is an odd number, and determines, according to the PUCCH format, that the number of HARQ-ACK bits required to be fed back as a maximum number of bits that can be supported by the PUCCH format; the terminal determines, according to a TPC command control field of DCI of which the value of a DAI is greater than K and the value of the DAI is an even number, a PUCCH resource corresponding to the PUCCH format; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the PUCCH format.

Optionally, the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the terminal receives no second control field, and the maximum value of the DAIs included in DCI received by the terminal or the number of the PDSCHs/(E)PDCCHs received by the terminal is not above a first preset value, the method further includes that: the terminal determines that a PUCCH format used for feeding back an HARQ-ACK is the first preset PUCCH format and that the number of HARQ-ACK bits required to be fed back is a maximum number of HARQ-ACK bits that can be supported by the first preset PUCCH format; the terminal determines, according to a received TPC command control field for which the value of the DAI is an even number, a PUCCH resource corresponding to the first preset PUCCH format; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the first preset PUCCH format.

Optionally, the terminal and the base station agree that the maximum value of the DAIs in the DCI received by the terminal or the number of the PDSCHs/(E)PDCCHs received by the terminal is greater than a second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the DCI received by the terminal includes: the first, the second and the third control fields, and the maximum value of the DAIs included in DCI received by the terminal or the number of the PDSCHs/(E)PDCCHs received by the terminal is greater than the second preset value, the method further includes that: the terminal determines a PUCCH format used for feeding back an HARQ-ACK according to a TPC command control field of DCI of which the value of a DAI is greater than K and the value of the DAI is an odd number, and determines, according to the PUCCH format, that the number of HARQ-ACK bits required to be fed back is a maximum number of HARQ-ACK bits that can be supported by the PUCCH format; the terminal determines, according to a TPC command control field of DCI of which the value of a DAI is greater than K and the value of the DAI is an even number, a PUCCH resource corresponding to the PUCCH format; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the PUCCH format.

Optionally, the terminal and the base station agree that the maximum value of the DAIs in the DCI received by the terminal or the number of the PDSCHs/(E)PDCCHs received by the terminal is greater than a second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate the number of HARQ-ACKs required to be fed back by the terminal, when the DCI received by the terminal includes: the first, the second and the third control fields, and the maximum value of the DAIs in the DCI received by the terminal or the number of the PDSCHs/(E)PDCCHs received by the terminal is greater than the second preset value, the method further includes that: the terminal determines, according to a TPC command control field of DCI of which the value of a DAI is greater than K and the value of the DAI is an odd number, the number of HARQ-ACK bits required to be fed back, and determines a PUCCH format that can carry the determined number of HARQ-ACK bits according to the determined number of HARQ-ACK bits; the terminal determines a PUCCH resource corresponding to the PUCCH format according to the TPC command control field of DCI of which the value of a DAI is greater than K and the value of the DAI is an even number; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the PUCCH format.

Optionally, the terminal and the base station agree that the maximum value of the DAIs in the DCI received by the terminal or the number of the PDSCHs/(E)PDCCHs received by the terminal is smaller than or equal to the second preset value, the TPC command control field of DCI of which the value of a DAI is greater than K is the third control field, the third control field is a resource indication control field for indicating the first preset PUCCH format, when the DCI received by the terminal includes a DAI control field, and the maximum value of the DAIs in the DCI received by the terminal or the number of the PDSCHs/(E)PDCCHs received by the terminal is smaller than or equal to the second preset value, the method further includes that: the terminal determines that a PUCCH used for feeding back an HARQ-ACK is the first preset PUCCH format and that the number of HARQ-ACK bits required to be fed back is a maximum number of HARQ-ACK bits that can be supported by the first preset PUCCH format; the terminal determines a PUCCH resource corresponding to the first preset PUCCH format according to a TPC command control field of DCI of which the value of a DAI is greater than K; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the first preset PUCCH format.

Optionally, the terminal and the base station agree that if the maximum value of the DAIs in the DCI received by the terminal or the number of the PDSCHs/(E)PDCCHs received by the terminal is smaller than or equal to a third preset value, the TPC command control field of DCI of which the value of a DAI is greater than K is the third control field, the third control field is a resource indication control field for indicating the first preset PUCCH format; and agree that if the maximum value of the DAIs in the DCI received by the terminal or the number of the PDSCHs/(E)PDCCHs received by the terminal is greater than a fourth preset value, the TPC command control field in the DCI of which the value of a DAI is greater than K is the third control field, the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is smaller than or equal to the third preset value, the method further includes that: the terminal determines that a PUCCH used for feeding back an HARQ-ACK is the first preset PUCCH format and that the number of HARQ-ACK bits required to be fed back is a maximum number of HARQ-ACK bits that can be supported by the first preset PUCCH format; the terminal determines a PUCCH resource corresponding to the first preset PUCCH format according to a TPC command control field of DCI of which the value of a DAI is greater than K; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the first preset PUCCH format.

Optionally, the terminal and the base station agree that if the maximum value of the DAIs in the DCI received by the terminal or the number of the PDSCHs/(E)PDCCHs received by the terminal is smaller than or equal to the third preset value, the TPC command control field of DCI of which the value of a DAI is greater than K is the third control field, the third control field is a resource indication control field for indicating the first preset PUCCH format; and agree that if the maximum value of the DAIs in the DCI received by the terminal or the number of the PDSCHs/(E)PDCCHs received by the terminal is greater than the fourth preset value, the TPC command control field in the DCI of which the value of a DAI is greater than K is the third control field, the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is greater than the fourth preset value, the method further includes that: the terminal determines that a PUCCH format used for feeding back an HARQ-ACK is the second preset PUCCH format and that the number of HARQ-ACK bits required to be fed back is a maximum number of HARQ-ACK bits that can be supported by the second preset PUCCH format; the terminal determines a PUCCH resource corresponding to the second preset PUCCH format according to a TPC command control field of DCI of which the value of a DAI is greater than K; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the second preset PUCCH format.

Optionally, the terminal and the base station agree that a TPC command control field included in DCI of which the value of a DAI is greater than K is used to indicate a PUCCH format used for feeding back an HARQ-ACK and a resource corresponding to the PUCCH format, when the DCI received by the terminal includes: a DAI control field, and a TPC command control field for which the value of a DAI is greater than K, the method further includes that: the terminal determines a PUCCH format used for feeding back an HARQ-ACK according to the TPC command control field included in DCI of which the value of a DAI is greater than K and a PUCCH resource corresponding to the determined PUCCH format; the terminal determines that the number of HARQ-ACK bits required to be fed back is a maximum number of HARQ-ACK bits that can be supported by the determined PUCCH format; the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and the terminal sends the HARQ-ACKs on the PUCCH resource corresponding to the determined PUCCH format.

Optionally, the terminal and the base station agree that the DCI received by the terminal includes a DAI control field, for an FDD system, the newly added DAI control field is used to indicate, in the first N pieces of DCI, the number of the serving cells scheduled in the current subframe according to a first preset order and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order; and for a TDD system, the DAI control fields in the same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the values of the DAIs in the first N pieces of DCI are set to be the same.

Optionally, the first preset order is an ascending order of indexes of the serving cells.

Optionally, for each downlink subframe, the terminal determines whether or not the DAI control fields in the first (N+1) pieces of DCI received are the same, and if the DAI control fields in the first (N+1) pieces of DCI received are the same, the method further includes that: the terminal determines that no loss occurs to the first N pieces of DCI in the subframe; the terminal determines, according to the DAIs in the first N pieces of DCI and the maximum value of the DAIs received in the current subframe or the number of the PDSCHs/(E)PDCCHs received in the current subframe, the number of HARQ-ACK bits required to be fed back in the current subframe, wherein the states of the first N HARQ-ACK feedback bit positions are set to be ACK or NACK according to the result of detection of the first N PDSCHs/(E)PDCCHs; the terminal sorts, starting from the (N+1)th HARQ-ACK, HARQ-ACKs according to the received DAIs subsequent to the (N+1)th DAI, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and after determining the number of HARQ-ACK bits required to be fed back in each downlink subframe, the terminal determines a total number of HARQ-ACK bits required to be fed back and determines, according to the total number of HARQ-ACK bits required to be fed back, a PUCCH format that can carry the total number of HARQ-ACK bits.

Optionally, for each downlink subframe, the terminal determines whether or not the DAI control fields in the first (N+1) pieces of DCI received are the same, and if not, the method further includes that: in a case when the terminal determines that a loss occurs to the first N pieces of DCI in the subframe, the terminal determines, according to the DAIs in the first N pieces of DCI and the maximum value of the DAIs received in the current subframe or the number of the PDSCHs/(E)PDCCHs received in the current subframe, the number of HARQ-ACK bits required to be fed back in the current subframe, wherein the states of the first N HARQ-ACK feedback bit positions are set to be NACK; the terminal sorts, starting from the (N+1)th HARQ-ACK, HARQ-ACKs according to the received DAIs subsequent to the (N+1)th DAI, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and after determining the number of HARQ-ACK bits required to be fed back in each downlink subframe, the terminal determines a total number of HARQ-ACK bits required to be fed back and determines, according to the total number of HARQ-ACK bits required to be fed back, a PUCCH format that can carry the total number of HARQ-ACK bits; the terminal determines a PUCCH resource corresponding to the PUCCH format according to the TPC command control field of a secondary serving cell; and the terminal sends the HARQ-ACKs on the PUCCH resource corresponding to the determined PUCCH format.

Optionally, for each downlink, when the number of PDCCHs bearing DCI, which are received by the terminal, is smaller than or equal to N, the method further includes that: the terminal determines, according to the DAI in the first piece of DCI and the number of the PDSCHs/(E)PDCCHs currently received, the number of HARQ-ACK bits required to be fed back in the current subframe, sets each number of HARQ-ACK bits required to be fed back to be NACK if the determined number of HARQ-ACK bits required to be fed back is not equal to the number of the PDSCHs/(E)PDCCHs received, or sets a state corresponding to an HARQ-ACK bit position to be ACK or NACK according to a preset order based on a detection result if the determined number of HARQ-ACK bits required to be fed back is equal to the number of the PDSCHs/(E)PDCCHs received; after determining the number of HARQ-ACK bits required to be fed back in each downlink subframe, the terminal determines a total number of HARQ-ACK bits required to be fed back and a PUCCH format that can carry the total number of HARQ-ACK bits according to the total number of HARQ-ACK bits; the terminal determines a PUCCH resource corresponding to the PUCCH format according to the TPC command control field of the secondary serving cell; and the terminal sends the HARQ-ACKs on the PUCCH resource corresponding to the determined PUCCH format.

In accordance with another aspect of the invention, a method for sending uplink control information is provided, including that: a base station sends DCI to a terminal, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; and the base station receives HARQ-ACK information which is sent by the terminal in response to the DCI.

Optionally, the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine the PUCCH format used by the terminal when the terminal feeds back the HARQ-ACK.

Optionally, for an FDD system, the first control field is a DAI control field newly added in the control information, wherein the DAI control field is used to indicate the number of the PDCCHs/EPDCCHs with assigned PDSCH transmission(s) and PDCCHs/EPDCCHs indicating downlink SPS release which are already sent by the base station according to a first preset order; and for a TDD system, the first control field is a DAI control field which is used to indicate the number of the PDCCHs/EPDCCHs with assigned PDSCH transmission(s) and PDCCHs/EPDCCHs indicating downlink SPS release which are already sent according to a second preset order.

Optionally, the second control field is a newly added control field, and the third control field is a TPC command control field in the DCI of which the value of the DAI control field is greater than K; or the second control field is a TPC command control field of DCI of which the value of the DAI control field is greater than K and the value is an odd number, and the third command control field is a TPC command control field of DCI of which the value of the DAI control field is greater than K and the value is an even number; or the second control field is a TPC command control field of DCI of which the value of the DAI control field is greater than K and the value is an even number, and the third command control field is a TPC command control field of DCI of which the value of the DAI control field is greater than K and the value is an odd number, wherein the value of each second control field is set to be the same, the value of each third control field is also set to be the same, the value of the second control field is different from that of the third control field; or in a case when the number of the PDSCHs/(E)PDCCHs scheduled by the base station in the current subframe is greater than a second preset value, the second control field is a TPC command control field of DCI of which the value of the DAI control field is greater than K and the value is an odd number, and the third control field is a TPC command control field of DCI of which the value of the DAI control field is greater than K and the value is an even number; or the second control field is a TPC command control field of DCI of which the value of the DAI control field is greater than K and the value is an even number, and the third control field is a TPC command control field of DCI of which the value of the DAI control field is greater than K and the value is an odd number, wherein the value of each second control field is also set to be the same, the value of each third control field is also set to be the same, the value is also set to be the same, the value of the second control field is different from that of the third control field; or in a case when the number of the PDSCHs/(E)PDCCHs scheduled by the base station in the current subframe is smaller than or equal to a third preset value, the third control field is a TPC command control field in the DCI of which the value of the DAI control field is greater than K, and the base station and the terminal agree to use a first preset PUCCH format for feeding back an HARQ-ACK; or in a case when the number of the PDSCHs/(E)PDCCHs scheduled by the base station in the current subframe is greater than a fourth preset value, the third control field is a TPC command control field included in DCI of which the value of a DAI is greater than K, and the base station and the terminal agree to use a second preset PUCCH format for feeding back an HARQ-ACK, wherein the fourth preset value is greater than the third preset value, the values of all the third control fields are the same, wherein K is a positive integer.

Optionally, the base station and the terminal agree to use a TPC command control field included in DCI of which the value of the DAI control field is greater than K to indicate a PUCCH format and a PUCCH resource that are used by the terminal for feeding back an HARQ-ACK, wherein K is a positive integer.

Optionally, for an FDD system, the newly added DAI control field is used to indicate, in the first N pieces of DCI, the number of the serving cells scheduled in the current subframe according to a preset order and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells; and for a TDD system, the DAI control fields in the same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells, and the values of the DAIs in the first N pieces of DCI are the same.

Optionally, the third control field is a TCP command control field included in the downlink control information of a secondary serving cell, wherein the PUCCH resource is a specified PUCCH format or a new PUCCH format.

In accordance with still another aspect of the invention, an apparatus for sending uplink control information is provided, wherein the apparatus is located at the side of a terminal and includes: a first receiving module arranged to receive the DCI sent by a base station, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; a determination module arranged to determine, according to the downlink control information, related parameter information required by the terminal when the terminal feeds back HARQ-ACK information, wherein the related parameter information includes: the number of HARQ-ACK bits, the PUCCH format of an HARQ-ACK and a PUCCH resource corresponding to the PUCCH format; and a first sending module arranged to send the HARQ-ACK information to the base station.

In accordance with yet still another aspect of the invention, an apparatus for managing uplink control information is provided, wherein the apparatus is located at the side of a base station and includes: a second sending module arranged to send DCI to a terminal, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; and a second receiving module arranged to receive HARQ-ACK information which is sent by the terminal in response to the DCI.

According to the invention, a terminal determines, according to the DCI sent by a base station, related parameter information which is required by the terminal for feeding back HARQ-ACK information (that is, DCI) and which includes the number of HARQ-ACK bits required to be fed back by the terminal, a PUCCH format for feeding back an HARQ-ACK and a PUCCH resource, and sends the HARQ-ACK information to the base station, thus addressing the problem existing in the conventional art as to how can a terminal determine a PUCCH format for sending an HARQ-ACK when a new PUCCH format is introduced and filling related technological gaps.

BRIEF DESCRIPTION OF DRAWINGS

The accompanying drawings described herein which are incorporated into and form a part of the application are provided for the better understanding of the invention, and exemplary embodiments of the invention and description thereof serve to illustrate the invention but are not to be construed as improper limitations to the invention. In the accompanying drawings:

FIG. 1 is a schematic diagram illustrating the time-frequency structure of a PUCCH format 1/1a/1b according to the conventional art;

FIG. 2 is a schematic diagram illustrating the time-frequency structure of PUCCH format 2 according to the conventional art;

FIG. 3 is a schematic diagram illustrating the time-frequency structure of PUCCH format 3 according to the conventional art;

FIG. 4 is a flowchart 1 illustrating a method for sending uplink control information according to an embodiment of the invention;

FIG. 5 is a flowchart 2 illustrating a method for sending uplink control information according to an embodiment of the invention;

FIG. 6 is a block diagram 1 illustrating an apparatus for sending uplink control information according to an embodiment of the invention;

FIG. 7 is a block diagram 2 illustrating an apparatus for sending uplink control information according to an embodiment of the invention;

FIG. 8 is a schematic diagram illustrating the PUCCH format 3 of two Physical Resource Blocks (PRBs) according to an optional embodiment of the invention;

FIG. 9 is a schematic diagram illustrating an RM(32, O) encoder according to an optional embodiment of the invention;

FIG. 10 is a schematic diagram illustrating an PUCCH format 3 not subjected to time domain extension according to an optional embodiment of the invention;

FIG. 11 is a schematic diagram illustrating the location of a reference signal at the position of the fourth time-domain symbol of each time slot according to an optional embodiment of the invention;

FIG. 12 is a schematic diagram illustrating a 3-RM encoding structure according to an optional embodiment of the invention;

FIG. 13 is a schematic diagram illustrating a 6-RM encoding structure according to an optional embodiment of the invention;

FIG. 14 is a schematic diagram illustrating a 12-RM encoding structure according to an optional embodiment of the invention;

FIG. 15 is a schematic diagram illustrating a DAI control field in an FDD system according to an optional embodiment of the invention;

FIG. 16 is a schematic diagram illustrating an extended DAI control field in a TDD system according to an optional embodiment of the invention;

FIG. 17 is a flowchart illustrating the flow of a receiving processing performed by a terminal according to an optional embodiment of the invention;

FIG. 18 is a schematic diagram illustrating the carriers configured by a base station and a terminal according to an optional embodiment of the invention;

FIG. 19 is a schematic diagram 1 illustrating the number of the PDSCHs/(E)PDCCHs received by a terminal according to an optional embodiment of the invention;

FIG. 20 is a schematic diagram 2 illustrating the number of the PDSCHs/(E)PDCCHs received by a terminal according to an optional embodiment of the invention;

FIG. 21 is a schematic diagram 3 illustrating the number of the PDSCHs/(E)PDCCHs received by a terminal according to an optional embodiment of the invention;

FIG. 22 is a schematic diagram 4 illustrating the number of the PDSCHs/(E)PDCCHs received by a terminal according to an optional embodiment of the invention;

FIG. 23 is a schematic diagram 5 illustrating the number of the PDSCHs/(E)PDCCHs received by a terminal according to an optional embodiment of the invention; and

FIG. 24 is a schematic diagram 6 illustrating the number of the PDSCHs/(E)PDCCHs received by a terminal according to an optional embodiment of the invention.

**DETAILED DESCRIPTION**

It should be noted that the embodiments of the invention and the features thereof can be combined with each other if no conflict is caused. The invention will be described below in detail with reference to accompanying drawings when read in conjunction with specific embodiments.

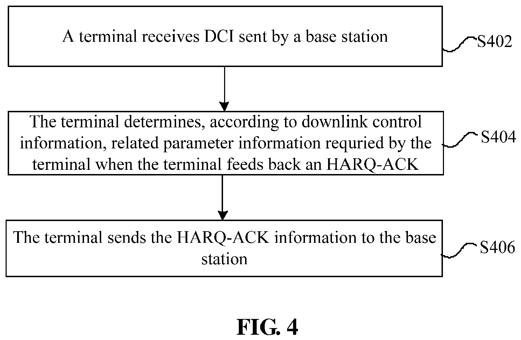

A method for sending uplink control information is provided in the embodiment, FIG. 4 is a flowchart illustrating a method for sending uplink control information according to an embodiment of the invention, and as shown in FIG. 4, the method includes the following steps:

S402: a terminal receives the DCI sent by a base station, wherein

the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK;

In step S404, the terminal determines, according to the downlink control information, related parameter information required by the terminal when the terminal feeds back HARQ-ACK information, wherein

the related parameter information includes: the number of HARQ-ACK bits, the PUCCH format of an HARQ-ACK, and a PUCCH resource corresponding to the PUCCH format; and

S406: the terminal sends the HARQ-ACK information to the base station.

By executing the foregoing steps S402-S406 included in the embodiment, a terminal determines, according to the DCI sent by a base station, related parameter information which is required by the terminal for feeding back HARQ-ACK information (that is, DCI) and which includes the number of HARQ-ACK bits required to be fed back by the terminal, a PUCCH format for feeding back an HARQ-ACK and a PUCCH resource, and sends the HARQ-ACK information to the base station, thus addressing the problem existing in the conventional art as to how can a terminal determine a PUCCH format for sending an HARQ-ACK when a new PUCCH format is introduced and filling related technological gaps.

In an optional implementation mode of the embodiment, the PUCCH format may be a first preset PUCCH format and a second PUCCH format.

Based on the PUCCH format, in the embodiment, for an FDD system, the first control field is a DAI control field newly added in the control information, wherein the DAI control field is used to indicate the number of the PDCCHs/EPDCCHs with assigned PDSCH transmission(s) and PDCCHs/EPDCCHs indicating downlink SPS release which are already sent by the base station according to a first preset order; and

for a TDD system, the first control field is a DAI control field which is used to indicate the number of the PDCCHs/EPDCCHs with assigned PDSCH transmission(s) and PDCCHs/EPDCCHs indicating downlink SPS release which are already sent by the base station according to a second preset order.

Optionally, the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine an PUCCH format for feeding back an HARQ-ACK.

It should be noted that in a case when the second control field is used to indicate the number of HARQ-ACKs required to be fed back by the terminal, the method further includes that: the terminal determines the number of HARQ-ACKs required to be fed back by the terminal according to the maximum value of the received DAIs or the number of the PDSCHs/(E)PDCCHs.

Optionally, the terminal and the base station agree that the second control field is a control field newly added in the DCI, the second control field is used to indicate a PUCCH format used by the terminal when the terminal feeds back an HARQ-ACK, when the DCI received by the terminal includes: the first control field, the second control field and the third control field, the method of the embodiment further includes:

S1a: the terminal determines a PUCCH format used for feeding back an HARQ-ACK and determines, according to the PUCCH format, the number of HARQ-ACK bits required to be fed back as a maximum number of bits that can be supported by the PUCCH format;

S1b: the terminal determines a PUCCH resource corresponding to the PUCCH format according to the third control field;

S1c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S1d: the terminal sends the HARQ-ACKs on the PUCCH resource corresponding to the PUCCH format.

Optionally, the terminal and the base station agree that the second control field is a control field newly added in the DCI and the second control field indicates the number of HARQ-ACKs required to be fed back by the terminal, when the DCI received by the terminal includes: the first control field, the second control field and the third control field, the method of the embodiment further includes:

S2a: the terminal determines, according to the second control field, the number of HARQ-ACK bits required to be fed back, and determines, according to the determined number of HARQ-ACK bits required to be fed back, a PUCCH format that can carry the number of HARQ-ACK bits;

S2b: the terminal determines, according to the third control field, a PUCCH resource corresponding to the PUCCH format;

S2c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S2d: the terminal sends the HARQ-ACKs on the PUCCH resource corresponding to the PUCCH format.

Optionally, the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the DCI received by the terminal includes: the first control field, the second control field and the third control field, the method of the embodiment further includes:

S3a: the terminal determines a PUCCH format used for feeding back an HARQ-ACK according to a TPC command control field of DCI of which the value of a DAI is greater than K and the value of the DAI is an odd number, and determines, according to the PUCCH format, the number of HARQ-ACK bits required to be fed back as a maximum number of bits that can be supported by the PUCCH format;

S3b: the terminal determines, according to a TPC command control field of DCI of which the value of a DAI is greater than K and the value of the DAI is an even number, a PUCCH resource corresponding to the PUCCH format;

S3c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S3d: the terminal sends the HARQ-ACKs on the PUCCH resource corresponding to the PUCCH format.

Optionally, the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the terminal receives no second control field, and the maximum value of the DAIs included in DCI received by the terminal or the number of the PDSCHs/(E)PDCCHs received by the terminal is not above a first preset value, the method of the embodiment further includes:

S4a: the terminal determines that an PUCCH format used for feeding back an HARQ-ACK is the first preset PUCCH format and that the number of HARQ-ACK bits required to be fed back is a maximum number of HARQ-ACK bits that can be supported by the first preset PUCCH format;

S4b: the terminal determines, according to a received TPC command control field for which the value of the DAI is an even number, a PUCCH resource corresponding to the first preset PUCCH format;

S4c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S4d: the terminal sends the HARQ-ACKs on the PUCCH resource corresponding to the first preset PUCCH format.

Optionally, when the terminal and the base station agree that the maximum value of the DAIs in the DCI received by the terminal or the number of the PDSCHs/(E)PDCCHs received by the terminal is greater than a second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the DCI received by the terminal includes: the first, the second and the third control fields, and the maximum value of the DAIs in the DCI received by the terminal or the number of the PDSCHs/(E)PDCCHs received by the terminal is greater than a second preset value, the method of the embodiment further includes:

S5a: the terminal determines a PUCCH format used for feeding back an HARQ-ACK according to a TPC command control field of DCI of which the value of a DAI is greater than K and the value of the DAI is an odd number, and determines, according to the PUCCH format, that the number of HARQ-ACK bits required to be fed back is a maximum number of HARQ-ACK bits that can be supported by the PUCCH format;

S5b: the terminal determines, according to a TPC command control field of DCI of which the value of a DAI is greater than K and the value of the DAI is an even number, a PUCCH resource corresponding to the PUCCH format;

S5c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S5d: the terminal sends the HARQ-ACKs on the PUCCH resource corresponding to the PUCCH format.

Optionally, the terminal and the base station agree that the maximum value of the DAIs in the DCI received by the terminal or the number of the PDSCHs/(E)PDCCHs received by the terminal is greater than the second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate the number of HARQ-ACKs required to be fed back by the terminal, when the DCI received by the terminal includes: the first, the second and the third control fields, and the maximum value of the DAIs in the DCI received by the terminal or the number of the PDSCHs/(E)PDCCHs received by the terminal is greater than the second preset value, the method of the embodiment may further include:

S6a: the terminal determines that a PUCCH format used for feeding back an HARQ-ACK is the first preset PUCCH format and that the number of HARQ-ACK bits required to be fed back is a maximum number of HARQ-ACK bits that can be supported by the first preset PUCCH format;

S6b: the terminal determines a PUCCH resource corresponding to the first preset PUCCH format according to a TPC command control field of DCI of which the value of a DAI is greater than K;

S6c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S6d: the terminal sends the HARQ-ACKs on the PUCCH resource corresponding to the first preset PUCCH format.

Optionally, the terminal and the base station agree that the maximum value of the DAIs in the DCI received by the terminal or the number of the PDSCHs/(E)PDCCHs received by the terminal is smaller than or equal to the second preset value, the TPC command control field of DCI of which the value of a DAI is greater than K is the third control field, the third control field is a resource indication control field for indicating the first preset PUCCH format, when the DCI received by the terminal includes a DAI control field, and the maximum value of the DAIs in the DCI received by the terminal or the number of the PDSCHs/(E)PDCCHs received by the terminal is smaller than or equal to the second preset value, the method of the embodiment may further include:

S7a: the terminal determines that a PUCCH used for feeding back an HARQ-ACK is the first preset PUCCH format and that the number of HARQ-ACK bits required to be fed back is a maximum number of HARQ-ACK bits that can be supported by the first preset PUCCH format;

S7b: the terminal determines a PUCCH resource corresponding to the first preset PUCCH format according to a TPC command control field of DCI of which the value of a DAI is greater than K;

S7c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S7d: the terminal sends the HARQ-ACKs on the PUCCH resource corresponding to the first preset PUCCH format.

Optionally, the terminal and the base station agree that if the maximum value of the DAIs in the DCI received by the terminal or the number of the PDSCHs/(E)PDCCHs received by the terminal is smaller than or equal to a third preset value, the TPC command control field of DCI of which the value of a DAI is greater than K is the third control field, the third control field is a resource indication control field for indicating the first preset PUCCH format; and agree that if the maximum value of the DAIs in the DCI received by the terminal or the number of the PDSCHs/(E)PDCCHs received by the terminal is greater than the fourth preset value, the TPC command control field in the DCI of which the value of a DAI is greater than K is the third control field, the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is smaller than or equal to the third preset value, the method of the embodiment may further include:

S8a: the terminal determines that a PUCCH format used for feeding back an HARQ-ACK is the first preset PUCCH format and that the number of HARQ-ACK bits required to be fed back is a maximum number of HARQ-ACK bits that can be supported by the first preset PUCCH format;

S8b: the terminal determines a PUCCH resource corresponding to the first preset PUCCH format according to a TPC command control field of DCI of which the value of a DAI is greater than K;

S8c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S8d: the terminal sends the HARQ-ACKs on the PUCCH resource corresponding to the first preset PUCCH format.

Optionally, the terminal and the base station agree that the maximum value of the DAIs in the DCI received by the terminal or the number of the PDSCHs/(E)PDCCHs received by the terminal is smaller than or equal to a third preset value, the TPC command control field of DCI of which the value of a DAI is greater than K is the third control field, the third control field is a resource indication control field for indicating the first preset PUCCH format, the maximum value of the DAIs in the DCI received by the terminal or the number of the PDSCHs/(E)PDCCHs received by the terminal is greater than the fourth preset value, the TPC command control field in the DCI of which the value of a DAI is greater than K is the third control field, the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is greater than the fourth preset value, the method of the embodiment may further include:

S9a: the terminal determines that a PUCCH format used for feeding back an HARQ-ACK is the second preset PUCCH format and that the number of HARQ-ACK bits required to be fed back is a maximum number of HARQ-ACK bits that can be supported by the second preset PUCCH format;

S9b: the terminal determines a PUCCH resource corresponding to the second preset PUCCH format according to a TPC command control field of DCI of which the value of a DAI is greater than K;

S9c: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

S9d: the terminal sends the HARQ-ACKs on the PUCCH resource corresponding to the second preset PUCCH format.

Optionally, the terminal and the base station agree that a TPC command control field included in DCI of which the value of a DAI is greater than K is used to indicate a PUCCH format used for feeding back an HARQ-ACK and a resource corresponding to the PUCCH format, when the DCI received by the terminal includes: a DAI control field and a TPC command control field for which the value of the DAI is greater than K, the method of the embodiment may further include:

S10a: the terminal determines a PUCCH format used for feeding back an HARQ-ACK according to the TPC command control field included in DCI of which the value of a DAI is greater than K and a PUCCH resource corresponding to the determined PUCCH format, and determines that the number of HARQ-ACK bits required to be fed back is a maximum number of HARQ-ACK bits that can be supported by the determined PUCCH format;

SlOb: the terminal sorts HARQ-ACKs according to the received DAIs, determines, according to the result of the sorting, that a state corresponding to an HARQ-ACK bit position is ACK or NACK, and sets a state corresponding to an HARQ-ACK bit position where a corresponding PDSCH/(E)PDCCH is not received to be NACK; and

SlOc: the terminal sends the HARQ-ACKs on the PUCCH resource corresponding to the determined PUCCH format.

Optionally, the terminal and the base station agree that the DCI received by the terminal includes a DAI control field, for an FDD system, the newly added DAI control field is used to indicate, in the first N pieces of DCI, the number of the serving cells scheduled in the current subframe according to a preset order and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order; and for a TDD system, the DAI control fields in the same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the values of the DAIs in the first N pieces of DCI are set to be the same.

Optionally, the first preset order is an ascending order of indexes of the serving cells.

Optionally, for each downlink subframe, the terminal determines whether or not the DAI control fields in the first (N+1) pieces of DCI received are the same, and if the DAI control fields in the first (N+1) pieces of DCI received are the same, the method of the embodiment may further include:

S11a: the terminal determines that no loss occurs to the first N pieces of DCI in the subframe;

S11b: the terminal determines, according to the DAIs in the first N pieces of DCI and the maximum value of the DAIs received in the current subframe or the number of the PDSCHs/(E)PDCCHs received in the current subframe, the number of HARQ-ACK bits required to be fed back in the current subframe, wherein the states of the first N HARQ-ACK feedback bit positions are set to be ACK or NACK according to the result of detection of the first N PDSCHs/(E)PDCCHs;

S11c: the terminal sorts, starting from the (N+1)th HARQ-ACK, HARQ-ACKs according to the received DAIs subsequent to the (N+1)th DAI, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

Slid: after determining the number of HARQ-ACK bits required to be fed back in each downlink subframe, the terminal determines a total number of HARQ-ACK bits required to be fed back and determines, according to the total number of HARQ-ACK bits required to be fed back, a PUCCH format that can carry the total number of HARQ-ACK bits.

Optionally, for each downlink subframe, the terminal determines whether or not the DAI control fields in the first (N+1) pieces of DCI received are the same, and if not, the method of the embodiment may further include:

S12a: in a case when the terminal determines that a loss occurs to the first N pieces of DCI in the subframe, the terminal determines, according to the DAIs in the first N pieces of DCI and the maximum value of the DAIs received in the current subframe or the number of the PDSCHs/(E)PDCCHs received in the current subframe, the number of HARQ-ACK bits required to be fed back in the current subframe, wherein the states of the first N HARQ-ACK feedback bit positions are set to be NACK;

S12b: the terminal sorts, starting from the (N+1)th HARQ-ACK, HARQ-ACKs according to the received DAIs subsequent to the (N+1)th DAI, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

S13c: after determining the number of HARQ-ACK bits required to be fed back in each downlink subframe, the terminal determines a total number of HARQ-ACK bits required to be fed back and determines, according to the total number of HARQ-ACK bits required to be fed back, a PUCCH format that can carry the total number of HARQ-ACK bits;

S13d: the terminal determines a PUCCH resource corresponding to the PUCCH format according to the TPC command control field of a secondary serving cell; and

S14e: the terminal sends the HARQ-ACKs on the PUCCH resource corresponding to the determined PUCCH format.

Optionally, for each downlink, when the number of PDCCHs bearing DCI, which are received by the terminal, is smaller than or equal to N, the method of the embodiment may further include:

S15a: the terminal determines, according to the DAI in the first piece of DCI and the number of the PDSCHs/(E)PDCCHs currently received, the number of HARQ-ACK bits required to be fed back in the current subframe, sets each number of HARQ-ACK bits required to be fed back to be NACK if the determined number of HARQ-ACK bits required to be fed back is not equal to the number of the PDSCHs/(E)PDCCHs received, or sets a state corresponding to an HARQ-ACK bit position to be ACK or NACK according to a preset order based on a detection result if the determined number of HARQ-ACK bits required to be fed back is equal to the number of the PDSCHs/(E)PDCCHs received;

S15b: after determining the number of HARQ-ACK bits required to be fed back in each downlink subframe, the terminal determines a total number of HARQ-ACK bits required to be fed back and a PUCCH format that can carry the total number of HARQ-ACK bits according to the total number of HARQ-ACK bits;

S16c: the terminal determines a PUCCH resource corresponding to the PUCCH format according to the TPC command control field of the secondary serving cell; and

S17d: the terminal sends the HARQ-ACKs on the PUCCH resource corresponding to the determined PUCCH format.

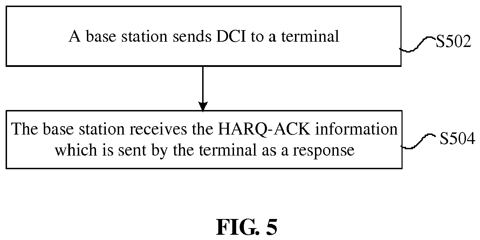

FIG. 5 is a flowchart illustrating a method for sending uplink control information according to an embodiment of the invention, and as shown in FIG. 5, the method includes the following steps:

S502: a base station sends DCI to a terminal, wherein

the DCI includes at least one of: a first control field for indicating information related to downlink scheduling, a second control field for indicating the terminal to determine an HARQ-ACK feedback mode, and a third control field for indicating a PUCCH resource used by the terminal when the terminal determines to feed back an HARQ-ACK; and

S504: the base station receives HARQ-ACK information which is sent by the terminal in response to the DCI.

Optionally, the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine the PUCCH format used by the terminal when the terminal feeds back the HARQ-ACK.
Optionally, for an FDD system, the first control field is a DAI control field newly added in the control information, wherein the DAI control field is used to indicate the number of the PDCCHs/EPDCCHs with assigned PDSCH transmission(s) and PDCCHs/EPDCCHs indicating downlink SPS release which are already sent by the base station according to a first preset order; and for a TDD system, the first control field is a DAI control field which is used to indicate the number of the PDCCHs/EPDCCHs with assigned PDSCH transmission(s) and PDCCHs/EPDCCHs indicating downlink SPS release which are already sent according to a second preset order.
Optionally, the second and the third control field exist in one of the following forms:

the second control field is a newly added control field, and the third control field is a TPC command control field in the DCI of which the value of the DAI control field is greater than K; or

the second control field is a TPC command control field of DCI of which the value of the DAI control field is greater than K and the value is an odd number, and the third command control field is a TPC command control field of DCI of which the value of the DAI control field is greater than K and the value is an even number; or the second control field is a TPC command control field of DCI of which the value of the DAI control field is greater than K and the value is an even number, and the third command control field is a TPC command control field of DCI of which the value of the DAI control field is greater than K and the value is an odd number, wherein the value of each second control field is set to be the same, the value of each third control field is also set to be the same, the value of the second control field is different from that of the third control field; or

in a case when the number of the PDSCHs/(E)PDCCHs scheduled by the base station in the current subframe is greater than a second preset value, the second control field is a TPC command control field of DCI of which the value of the DAI control field is greater than K and the value is an odd number, and the third control field is a TPC command control field of DCI of which the value of the DAI control field is greater than K and the value is an even number; or the second control field is a TPC command control field of DCI of which the value of the DAI control field is greater than K and the value is an even number, and the third control field is a TPC command control field of DCI of which the value of the DAI control field is greater than K and the value is an odd number, wherein the value of each second control field is also set to be the same, the value of each third control field is also set to be the same, the value is also set to be the same, the value of the second control field is different from that of the third control field; or

in a case when the number of the PDSCHs/(E)PDCCHs scheduled by the base station in the current subframe is smaller than or equal to a third preset value, the third control field is a TPC command control field in the DCI of which the value of the DAI control field is greater than K, and the base station and the terminal agree to use a first preset PUCCH format for feeding back an HARQ-ACK; or in a case when the number of the PDSCHs/(E)PDCCHs scheduled by the base station in the current subframe is greater than a fourth preset value, the third control field is a TPC command control field included in DCI of which the value of a DAI is greater than K, and the base station and the terminal agree to use a second preset PUCCH format for feeding back an HARQ-ACK, wherein the fourth preset value is greater than the third preset value, and the values of all the third control fields are the same.

Optionally, the base station and the terminal agree to use a TPC command control field included in DCI of which the value of the DAI control field is greater than K to indicate a PUCCH format and a PUCCH resource that are used by the terminal for feeding back an HARQ-ACK.

Optionally, for an FDD system, the newly added DAI control field is used to indicate, in the first N pieces of DCI, the number of the serving cells scheduled in the current subframe according to a preset order and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells; and for a TDD system, the DAI control fields in the same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells, and the values of the DAIs in the first N pieces of DCI are the same.

Optionally, the third control field is a TCP command control field included in the downlink control information of a secondary serving cell, wherein the PUCCH resource is a specified PUCCH format or a new PUCCH format.

An apparatus for sending uplink control information is also provided in the embodiment to realize the foregoing embodiments and optional implementation modes, and what has been described above is not described here repeatedly. The term 'module', as used hereinafter, is the combination of software and/or hardware for realizing predetermined functions. Although the apparatuses described in the following embodiments are implemented as software preferably, the implementation of the apparatuses as hardware or the combination of software and hardware may also be devised.

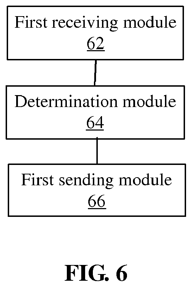

FIG. 6 is a block diagram illustrating an apparatus for sending uplink control information according to an embodiment of the invention, wherein the apparatus is located at the side of a terminal, and as shown in FIG. 6, the apparatus includes: a first receiving module 62 arranged to receive the DCI sent by a base station, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; a determination module 64 coupled with the first receiving module 62 and arranged to determine, according to the downlink control information, related parameter information required by the terminal when the terminal feeds back HARQ-ACK information, wherein the related parameter information includes: the number of HARQ-ACK bits, the PUCCH format of an HARQ-ACK and a PUCCH resource corresponding to the PUCCH format; and a first sending module 66 coupled with the first determination module 64 and arranged to send the HARQ-ACK information to the base station.

Optionally, the PUCCH format includes a first preset PUCCH format and a second preset PUCCH format.

For an FDD system, the first control field is a DAI control field newly added in the control information, wherein the DAI control field is used to indicate the number of the PDCCHs/EPDCCHs with assigned PDSCH transmission(s) and PDCCHs/EPDCCHs indicating downlink SPS release which are already sent by the base station according to a first preset order; and for a TDD system, the first control field is a DAI control field which is used to indicate the number of the PDCCHs/EPDCCHs with assigned PDSCH transmission(s) and PDCCHs/EPDCCHs indicating downlink SPS release which are already sent by the base station according to a second preset order.

Optionally, the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine an PUCCH format for feeding back an HARQ-ACK.

Optionally, in a case when the second control field is used to indicate the number of HARQ-ACKs required to be fed back by the terminal, the apparatus of the embodiment is also arranged to: determine the number of HARQ-ACKs required to be fed back by the terminal according to the maximum value of the received DAIs or the number of the PDSCHs/(E)PDCCHs.

Optionally, the terminal and the base station agree that the second control field is a control field newly added in the DCI, the second control field is used to indicate a PUCCH format used by the terminal when the terminal feeds back an HARQ-ACK, when the DCI received by the terminal includes: the first control field, the second control field and the third control field, the apparatus of the embodiment further includes:

a second determination module arranged to determine, according to the second control field, a PUCCH format used for feeding back an HARQ-ACK and determine, according to the PUCCH format, the number of HARQ-ACK bits required to be fed back as a maximum number of bits that can be supported by the PUCCH format;

a third determination module arranged to determine a PUCCH resource corresponding to the PUCCH format according to the third control field;

a fourth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a third sending module arranged to send the HARQ-ACKs on the PUCCH resource corresponding to the PUCCH format.

Optionally, the terminal and the base station agree that the second control field is a control field newly added in the DCI and the second control field indicates the number of HARQ-ACKs required to be fed back by the terminal, when the DCI received by the terminal includes: the first control field, the second control field and the third control field, the apparatus of the embodiment further includes:

a fifth determination module arranged to determine, according to the second control field, the number of HARQ-ACK bits required to be fed back, and determine, according to the determined number of HARQ-ACK bits required to be fed back, a PUCCH format that can carry the number of HARQ-ACK bits;

a sixth determination module arranged to determine, according to the third control field, a PUCCH resource corresponding to the PUCCH format;

a seventh determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a fourth sending module arranged to send the HARQ-ACKs on a PUCCH resource corresponding to the PUCCH format.

Optionally, the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the DCI received by the terminal includes: the first control field, the second control field and the third control field, the apparatus of the embodiment further includes:

an eighth determination module arranged to determine a PUCCH format used for feeding back an HARQ-ACK according to a TPC command control field of DCI of which the value of a DAI is greater than K and the value of the DAI is an odd number, and determine, according to the PUCCH format, the number of HARQ-ACK bits required to be fed back as a maximum number of bits that can be supported by the PUCCH format;

a ninth determination module arranged to determine, according to a TPC command control field of DCI of which the value of a DAI is greater than K and the value of the DAI is an even number, a PUCCH resource corresponding to the PUCCH format;

a tenth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a fifth sending module arranged to send the HARQ-ACKs on the PUCCH resource corresponding to the PUCCH format.

Optionally, the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the terminal receives no second control field, and the maximum value of the DAIs included in DCI received by the terminal or the number of the PDSCHs/(E)PDCCHs received by the terminal is not above a first preset value, the apparatus of the embodiment further includes:

an eleventh determination module arranged to determine that an PUCCH format used for feeding back an HARQ-ACK is the first preset PUCCH format and that the number of HARQ-ACK bits required to be fed back is a maximum number of HARQ-ACK bits that can be supported by the first preset PUCCH format;

a twelfth determination module arranged to determine, according to a received TPC command control field for which the value of the DAI is an even number, a PUCCH resource corresponding to the first preset PUCCH format;

a thirteenth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a sixth sending module arranged to send the HARQ-ACKs on the PUCCH resource corresponding to the first preset PUCCH format.

Optionally, the terminal and the base station agree that the maximum value of the DAIs in the DCI received by the terminal or the number of the PDSCHs/(E)PDCCHs received by the terminal is greater than a second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate a PUCCH format used by the terminal when the terminal feeds back an HARQ-ACK, when the DCI received by the terminal includes: the first, the second and the third control fields, and the maximum value of the DAIs in the DCI received or the number of the PDSCHs/(E)PDCCHs received is greater than the second preset value, the apparatus of the embodiment further includes:

a fourteenth determination module arranged to determine the PUCCH format used for feeding back an HARQ-ACK according to the TPC command control field of DCI of which the value of a DAI is greater than K and the value of the DAI is an odd number, and determine, according to the PUCCH format, that the number of HARQ-ACK bits fed back is a maximum number of HARQ-ACK bits that can be supported by the PUCCH format;

a fifteenth determination module arranged to determine, according to a TPC command control field of DCI of which the value of a DAI is greater than K and the value of the DAI is an even number, a PUCCH resource corresponding to the PUCCH format;

a sixteenth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a seventh sending module arranged to send the HARQ-ACKs on the PUCCH resource corresponding to the PUCCH format.

Optionally, the terminal and the base station agree that the maximum value of the DAIs in the DCI received by the terminal or the number of the PDSCHs/(E)PDCCHs received by the terminal is greater than a second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, the second control field is used to indicate the number of HARQ-ACKs required to be fed back by the terminal, when the DCI received by the terminal includes: the first, the second and the third control fields, and the maximum value of the DAIs in the DCI received by the terminal or the number of the PDSCHs/(E)PDCCHs received by the terminal is greater than the second preset value, the apparatus of the embodiment further includes:

a seventeenth determination module arranged to determine, according to a TPC command control field of DCI of which the value of a DAI is greater than K and the value of the DAI is an odd number, the number of HARQ-ACK bits required to be fed back, and determine a PUCCH format that can carry the determined number of HARQ-ACK bits according to the determined number of HARQ-ACK bits;

an eighteenth determination module arranged to determine a PUCCH resource corresponding to the PUCCH format according to a TPC command control field of DCI of which the value of a DAI is greater than K and the value of the DAI is an even number;

a nineteenth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

an eighth sending module arranged to send the HARQ-ACKs on the PUCCH resource corresponding to the PUCCH format.

Optionally, the terminal and the base station agree that if the maximum value of the DAIs in the DCI received by the terminal or the number of the PDSCHs/(E)PDCCHs received by the terminal is smaller than or equal to a second preset value, the TPC command control field of DCI of which the value of a DAI is greater than K is the third control field, the third control field is a resource indication control field for indicating the first preset PUCCH format, when the DCI received by the terminal includes a DAI control field, and the maximum value of the DAIs in the DCI received by the terminal or the number of the PDSCHs/(E)PDCCHs received by the terminal is smaller than or equal to the second preset value, the apparatus of the embodiment further includes:

a twentieth determination module arranged to determine that a PUCCH for feeding back an HARQ-ACK is the first preset PUCCH format and that the number of HARQ-ACK bits required to be fed back is a maximum number of HARQ-ACK bits that can be supported by the first preset PUCCH format;

a twenty-first determination module arranged to determine a PUCCH resource corresponding to the first preset PUCCH format according to a TPC command control field of DCI of which the value of a DAI is greater than K;

a twenty-second determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a ninth sending module arranged to send the HARQ-ACKs on the PUCCH resource corresponding to the first preset PUCCH format.

Optionally, the terminal and the base station agree that if the maximum value of the DAIs in the DCI received by the terminal or the number of the PDSCHs/(E)PDCCHs received by the terminal is smaller than or equal to a third preset value, the TPC command control field of DCI of which the value of a DAI is greater than K is the third control field, the third control field is a resource indication control field for indicating the first preset PUCCH format; and agree that if the maximum value of the DAIs in the DCI received by the terminal or the number of the PDSCHs/(E)PDCCHs received by the terminal is greater than the fourth preset value, the TPC command control field in the DCI of which the value of a DAI is greater than K is the third control field, the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is smaller than or equal to the third preset value, the apparatus of the embodiment may further include:

a twenty-third determination module arranged to determine that the PUCCH used for feeding back an HARQ-ACK is a first preset PUCCH format and that the number of HARQ-ACK bits required to be fed back is a maximum number of HARQ-ACK bits that can be supported by the first preset PUCCH format;

a twenty-fourth determination module arranged to determine a PUCCH resource corresponding to the first preset PUCCH format according to a TPC command control field of DCI of which the value of a DAI is greater than K;

a twenty-fifth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a tenth sending module arranged to send the HARQ-ACKs on the PUCCH resource corresponding to the first preset PUCCH format.

Optionally, the terminal and the base station agree that if the maximum value of the DAIs in the DCI received by the terminal or the number of the PDSCHs/(E)PDCCHs received by the terminal is smaller than or equal to a third preset value, the TPC command control field of DCI of which the value of a DAI is greater than K is the third control field, the third control field is a resource indication control field for indicating the first preset PUCCH format; and agree that if the maximum value of the DAIs in the DCI received by the terminal or the number of the PDSCHs/(E)PDCCHs received by the terminal is greater than the fourth preset value, the TPC command control field in the DCI of which the value of a DAI is greater than K is the third control field, the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is greater than the fourth preset value; the apparatus of the embodiment may further include:

a twenty-sixth determination module arranged to determine that a PUCCH used for feeding back an HARQ-ACK is the second preset PUCCH format and that the number of HARQ-ACK bits required to be fed back is a maximum number of HARQ-ACK bits that can be supported by the second preset PUCCH format;

a twenty-seventh determination module arranged to determine a PUCCH resource corresponding to the second preset PUCCH format according to the TPC command control field of DCI of which the value of a DAI is greater than K;

a twenty-eighth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

a tenth sending module arranged to send the HARQ-ACKs on the PUCCH resource corresponding to the second preset PUCCH format.

Optionally, the terminal and the base station agree that a TPC command control field included in DCI of which the value of a DAI is greater than K is used to indicate a PUCCH format used for feeding back an HARQ-ACK and a resource corresponding to the PUCCH format, when the DCI received by the terminal includes: a DAI control field and a TPC command control field for which the value of the DAI is greater than K, the apparatus of the embodiment may further include:

a twenty-ninth determination module arranged to determine a PUCCH format used for feeding back an HARQ-ACK according to the TPC command control field included in DCI of which the value of a DAI is greater than K and a PUCCH resource corresponding to the determined PUCCH format, and determine that the number of HARQ-ACK bits required to be fed back is a maximum number of HARQ-ACK bits that can be supported by the determined PUCCH format;

a thirtieth determination module arranged to sort HARQ-ACKs according to the received DAIs, determine, according to the result of the sorting, that a state corresponding to an HARQ-ACK bit position is ACK or NACK, and set a state corresponding to an HARQ-ACK bit position where a corresponding PDSCH/(E)PDCCH is not received to be NACK; and

an eleventh sending module arranged to send the HARQ-ACKs on the PUCCH resource corresponding to the determined PUCCH format.

Optionally, the terminal and the base station agree that the DCI received by the terminal includes a DAI control field, for an FDD system, the newly added DAI control field is used to indicate, in the first N pieces of DCI, the number of the serving cells scheduled in the current subframe according to a preset order and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order; and for a TDD system, the DAI control fields in the same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the values of the DAIs in the first N pieces of DCI are set to be the same.
Optionally, the first preset order is an ascending order of indexes of the serving cells.
Optionally, for each downlink subframe, the terminal determines whether or not the DAI control fields in the first (N+1) pieces of DCI received are the same, and if the DAI control fields in the first (N+1) pieces of DCI received are the same, the apparatus of the embodiment further includes:

a thirty-first determination module arranged to determine that no loss occurs to the first N pieces of DCI of a subframe, and

determine, according to the DAIs in the first N pieces of DCI and the maximum value of the DAIs received in the current subframe or the number of the PDSCHs/(E)PDCCHs received in the current subframe, the number of HARQ-ACK bits required to be fed back in the current subframe, wherein the states of the first N HARQ-ACK feedback bit positions are set to be ACK or NACK according to the result of detection of the first N PDSCHs/(E)PDCCHs;

a thirty-second determination module arranged to sort, starting from the (N+1)th HARQ-ACK, HARQ-ACKs according to the received DAIs subsequent to the (N+1)th DAI, determine, according to the result of the detection, a state corresponding to an HARQ-ACK bit position to be ACK or NACK, and set a state corresponding to an HARQ-ACK bit position where a corresponding PDSCH/(E)PDCCH is not received to be NACK; and

a thirty-third determination module arranged to determine, after determining the number of HARQ-ACK bits required to be fed back in each downlink subframe, a total number of HARQ-ACK bits required to be fed back and determine, according to the total number of HARQ-ACK bits required to be fed back, a PUCCH format that can carry the total number of HARQ-ACK bits.

Optionally, for each downlink subframe, the terminal determines whether or not the DAI control fields in the first (N+1) pieces of DCI received are the same, and if not, the apparatus of the embodiment further includes:

a thirty-fourth determination module arranged to determine, according to the DAIs in the first N pieces of DCI and the maximum value of the DAIs received in the current subframe or the number of the PDSCHs/(E)PDCCHs received in the current subframe, the number of HARQ-ACK bits required to be fed back in the current subframe if the terminal determines that a loss occurs to the first N pieces of DCI in the subframe a, wherein the states of the first N HARQ-ACK feedback bit positions are set to be NACK;

the thirty-fourth determination module arranged to sort, starting from the (N+1)th HARQ-ACK, HARQ-ACKs according to the received DAIs subsequent to the (N+1)th DAI determine, according to a detection result, a state corresponding to an HARQ-ACK bit position to be ACK or NACK, and set a state corresponding to an HARQ-ACK bit position where a corresponding PDSCH/(E)PDCCH is not received to be NACK;

a thirty-fifth determination module arranged to determine, after determining the number of HARQ-ACK bits required to be fed back in each downlink subframe, a total number of HARQ-ACK bits required to be fed back and determine, according to the total number of HARQ-ACK bits required to be fed back, a PUCCH format that can carry the total number of HARQ-ACK bits;

a thirty-sixth determination module arranged to determine a PUCCH resource corresponding to the PUCCH format according to the TPC command control field of a secondary serving cell; and

a twelfth sending module arranged to send the HARQ-ACKs on the PUCCH resource corresponding to the determined PUCCH format.

Optionally, for each downlink, when the number of PDCCHs bearing DCI, which are received by the terminal, is smaller than or equal to N, the apparatus of the embodiment further includes:

a thirty-seventh determination module arranged to determine, according to the DAI in the first piece of DCI and the number of the PDSCHs/(E)PDCCHs currently received, the number of HARQ-ACK bits required to be fed back in the current subframe, set each number of HARQ-ACK bits required to be fed back to be NACK if the determined number of HARQ-ACK bits required to be fed back is not equal to the number of the PDSCHs/(E)PDCCHs received, or set states corresponding to corresponding numbers of HARQ-ACK bits to be ACK or NACK according to a preset order based on a detection result;

a thirty-eighth determination module arranged to determine, after determining the number of HARQ-ACK bits required to be fed back in each downlink subframe, a total number of HARQ-ACK bits required to be fed back and a PUCCH format that can carry the total number of HARQ-ACK bits according to the total number of HARQ-ACK bits;

a thirty-ninth determination module arranged to determine a PUCCH resource corresponding to the PUCCH format according to the TPC command control field of the secondary serving cell; and

a thirteenth determination module arranged to send the HARQ-ACKs on the PUCCH resource corresponding to the determined PUCCH format.

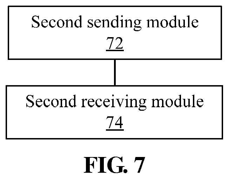

FIG. 7 is a block diagram 2 illustrating an apparatus for sending uplink control information according to an embodiment of the invention, wherein the apparatus is located at the side of a base station, and as shown in FIG. 7, the apparatus includes: a second sending module 72 arranged to send DCI to a terminal, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; and a second receiving module 74 coupled with the second sending module 72 and arranged to receive HARQ-ACK information which is sent by the terminal in response to the DCI.

Optionally, the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine an PUCCH format for feeding back an HARQ-ACK.

Optionally, for an FDD system, the first control field is a DAI control field newly added in the control information, wherein the DAI control field is used to indicate the number of the PDCCHs/EPDCCHs with assigned PDSCH transmission(s) and PDCCHs/EPDCCHs indicating downlink SPS release which are already sent by the base station according to a first preset order; and for a TDD system, the first control field is a DAI control field which is used to indicate the number of the PDCCHs/EPDCCHs with assigned PDSCH transmission(s) and PDCCHs/EPDCCHs indicating downlink SPS release which are already sent by the base station according to a second preset order.

Optionally, the second control field is a newly added control field, and the third control field is a TPC command control field in the DCI of which the value of the DAI control field is greater than K; or

the second control field is a TPC command control field of DCI of which the value of a DAI is greater than K and the value of the DAI is an odd number, and the third control field is a TCP command control field of DCI of which the value of a DAI is greater than K and the value of the DAI is an even number, or the second control field is a TPC command control field of DCI of which the value of a DAI is greater than K and the value of the DAI is an even number, and the third control field is a TCP command control field of DCI of which the value of a DAI is greater than K and the value of the DAI is an odd number, wherein the values of all the second control fields are the same, the values of all the third control fields are the same, and the values of the second control fields are different from those of the third control fields; or

when the number of the PDSCHs/(E)PDCCHs scheduled by the base station in the current subframe is greater than a second preset value, the second control field is a TPC command control field of DCI of which the value of a DAI is greater than K and the value of the DAI is an odd number, and the third control field is a TCP command control field of DCI of which the value of a DAI is greater than K and the value of the DAI is an even number, or the second control field is a TPC command control field of DCI of which the value of a DAI is greater than K and the value of the DAI is an even number, and the third control field is a TCP command control field of DCI of which the value of a DAI is greater than K and the value of the DAI is an odd number, wherein the values of all the second control fields are the same, the values of all the third control fields are the same, and the values of the second control fields are different from those of the third control fields; or

when the number of the PDSCHs/(E)PDCCHs scheduled by the base station in the current subframe is smaller than or equal to a third preset value, the third control field is a TPC command control field of DCI of which the value of a DAI is greater than K, and the base station and the terminal agree to use the first preset PUCCH format for feeding back an HARQ-ACK; when the number of the PDSCHs/(E)PDCCHs scheduled by the base station in the current subframe is greater than a fourth preset value, the third control field is a TPC command control field of DCI of which the value of a DAI is greater than K, and the base station and the terminal agrees to use the second preset PUCCH format for feeding back an HARQ-ACK, wherein the fourth preset value is greater than the third preset value, and the values of all the third control fields are the same.

Optionally, the base station and the terminal agree to use a TPC command control field included in DCI of which the value of the DAI control field is greater than K to indicate a PUCCH format and a PUCCH resource that are used by the terminal for feeding back an HARQ-ACK.

Optionally, for an FDD system, the newly added DAI control field is used to indicate, in the first N pieces of DCI, the number of the serving cells scheduled in the current subframe according to a preset order and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells; and for a TDD system, the DAI control fields in the same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the preset order is the ascending order of the indexes of serving cells, and the values of the DAIs in the first N pieces of DCI are the same.

Optionally, the third control field is a TCP command control field included in the downlink control information of a secondary serving cell, wherein the PUCCH resource is a specified PUCCH format or a new PUCCH format.

The invention is illustrated below with reference to optional embodiments.

First Embodiment

In an application scenario where the aggregation of at most 32 carriers is supported, a new PUCCH format is required to support the feedback of a great number of HARQ-ACKs, this new PUCCH format is referred to as PUCCH format 4 in the optional embodiment, there may be one or more new PUCCH formats, depending upon whether the one or more new PUCCH format are designed aiming at the maximum number of HARQ-ACK bits a system is required to support or the HARQ-ACKs that need to be currently fed back. The design of the new PUCCH format mainly includes: the design of a channel encoder and that of a reference signal. The following formats are involved in optional implementation modes of the optional embodiment.

PUCCH format 4-1: PUCCH format 3 of a plurality of OCC codes. The PUCCH format 3 used in related technologies realizes an inter-code multiplexing among terminals through OCC codes, if the occupation of a plurality of OCC codes by one terminal is allowed, which means that the terminal can use a plurality of PUCCH formats 3 to send corresponding HARQ-ACKs, because one PUCCH format 3 can bear 22 input bits at most, N PUCCH formats 3 occupy N OCC codes and accordingly bear 22N input bits. PUCCH format 4-1 is identical to PUCCH format 3 in channel encoding scheme and the design of a reference signal structure.

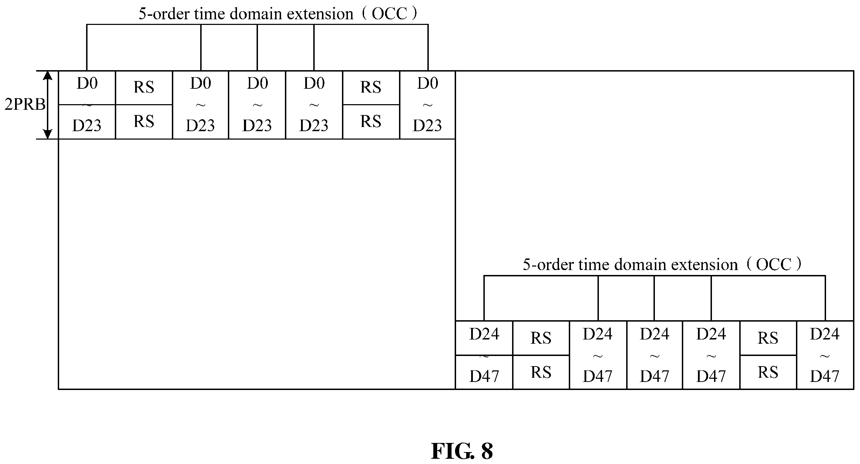

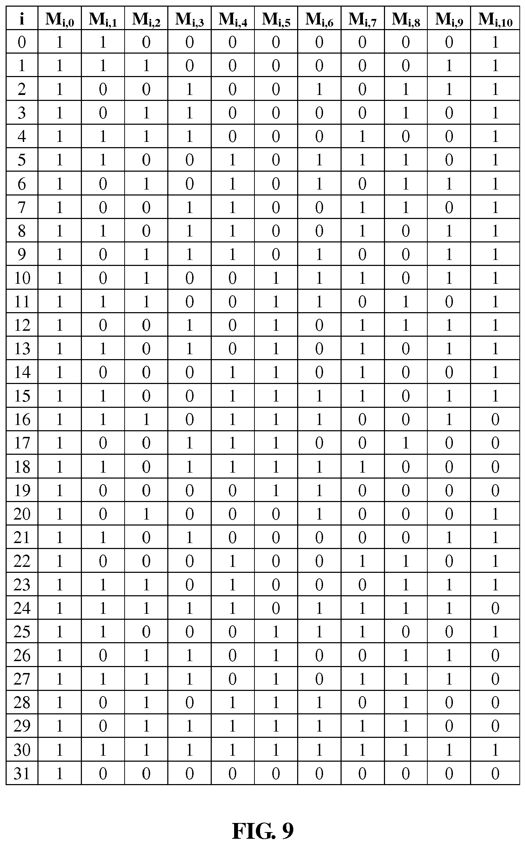

PUCCH format 4-2: PUCCH format 3 of a plurality of PRBs, in related technologies, PUCCH format 3 occupies one PRB in the frequency domain, and when the frequency domain resource of PUCCH format 3 is extended into a plurality of PRBs, the HARQ-ACK bits bearable increase in multiples, as a result, N PRBs can bear 22N HARQ-ACK bits, FIG. 8 is a schematic diagram illustrating the PUCCH format 3 of two PRBs according to an optional embodiment of the invention, as shown in FIG. 8, at most 44 HARQ-ACK input bits can be supported, the input bits are divided into four groups, each group consisting of 11 bits and passing a code generation matrix such as the RM(32, O) encoder shown in FIG. 9; FIG. 9 is a schematic diagram illustrating an RM(32, O) encoder according to an optional embodiment of the invention, 24 encoding bits are output in a truncated manner, four encoders totally output 96 bits, these 96 bits are modulated into 48 modulation symbols and finally mapped into the symbols shown in FIG. 8.

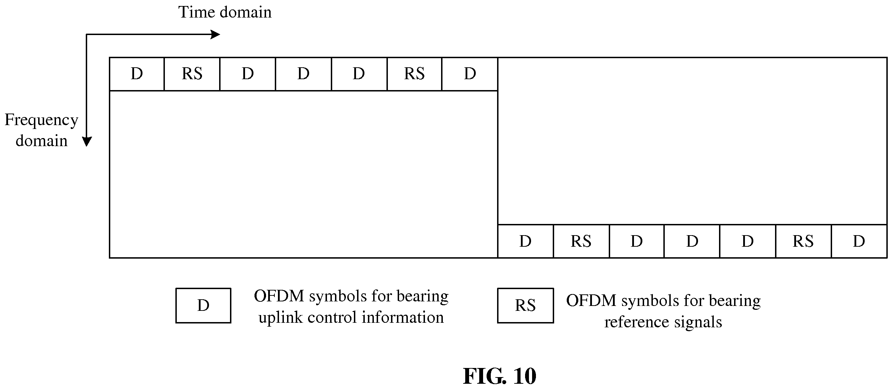

PUCCH format 4-3: PUCCH format 3 without time domain extension (OCC); in related technologies, PUCCH format 3 multiplexes terminals through time domain extension, if no time domain extension is performed, then the number of the born HARQ-ACK bits can be increased, the PUCCH format 3 used in related technologies adopts a 5-order time domain extension, if no time domain extension is performed, then the PUCCH format 3 of a PRB can bear 120 modulation symbols or 240 encoding bits in the case of the adoption of QPSK modulation, and FIG. 10 is a schematic diagram illustrating an PUCCH format 3 not subjected to time domain extension according to an optional embodiment of the invention. Due to the increase of the encoding bits output, the encoding scheme of a related PUCCH format 3 needs to be upgraded or replaced with a new encoding scheme. Adoptable encoding schemes include the following two schemes:

Encoding scheme 1: based on a plurality of RM codes; and

Encoding scheme 2: Tail-Biting Convolutional Code (TBCC).

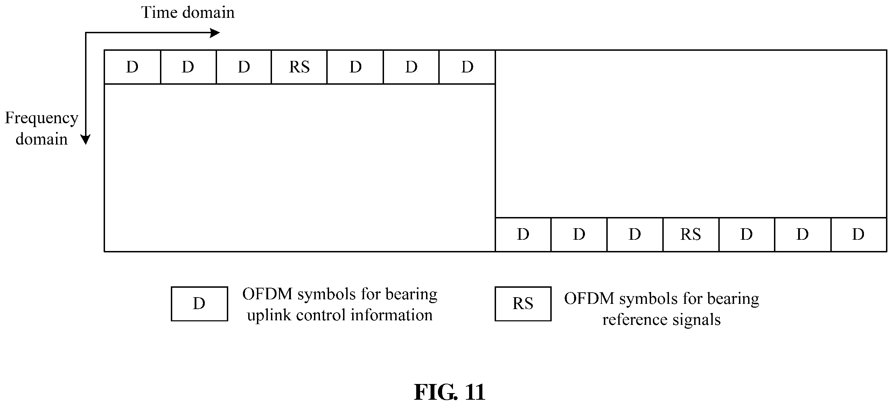

PUCCH format 4-4: based on PUSCH, the 'based on PUSCH' here refers to 'based on the reference signal structure of PUSCH', that is, having the same reference signal-data structure with existing PUSCH, FIG. 11 is a schematic diagram illustrating the location of a reference signal at the position of the fourth time-domain symbol of each time slot according to an optional embodiment of the invention, and as shown in FIG. 11, serial numbers start with 1. According to a PUSCH-based format, a PRB can support 144 modulation symbols and, in the case of the adoption of QPSK, 288 encoding bits, thus, the foregoing two encoding schemes can be both used as a channel encoding scheme.

For PUCCH formats 4-3 and 4-4, if the requirements on performance cannot be met by one PRB, then the one PRB may also be extended into a plurality of PRBs.

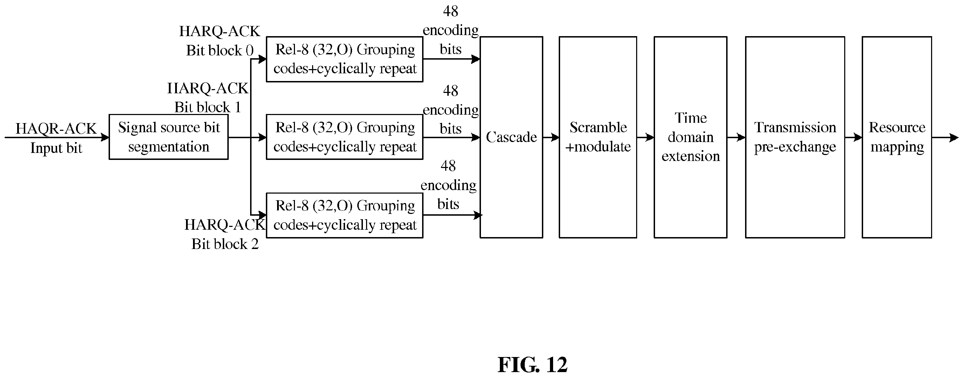

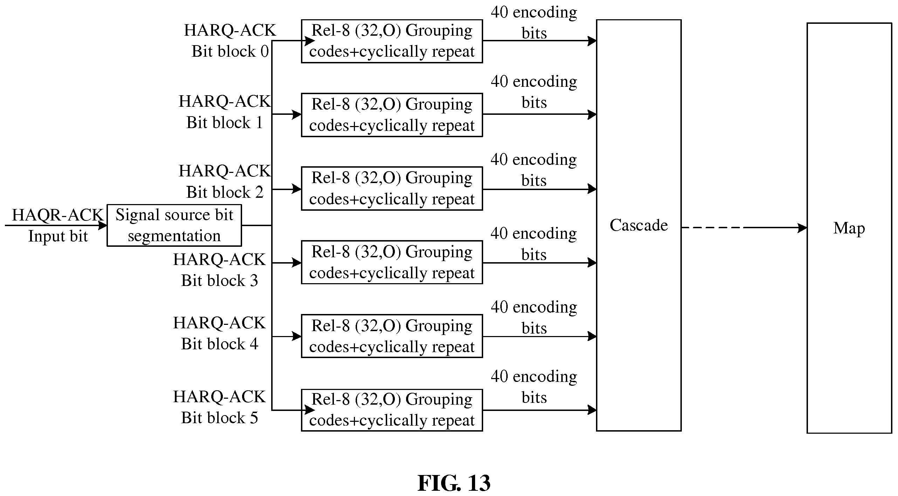

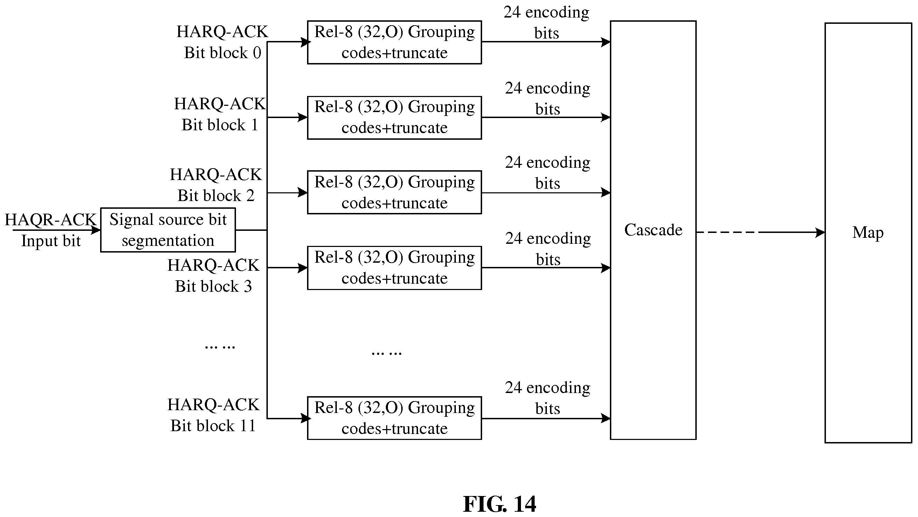

It should be noted that on the basis of PUCCH format 4-4, different HARQ-ACK input bits or a different number of RM codes may be considered when an encoding scheme based on a plurality of RM codes is adopted. However, for the reason of complexity, the new formats introduced cannot be too many. When a plurality of RM codes are employed as a channel encoding scheme, in view of the typical HARQ-ACK input bit range, for example, 32/64/128, 3-RM, 6-RM or 12-RM may be used as a channel encoding scheme, FIG. 12 is a schematic diagram illustrating a 3-RM encoding structure according to an optional embodiment of the invention, FIG. 13 is a schematic diagram illustrating a 6-RM encoding structure according to an optional embodiment of the invention, FIG. 14 is a schematic diagram illustrating a 12-RM encoding structure according to an optional embodiment of the invention, as shown in FIG. 12-FIG. 14, the RM codes are (32, O) block codes used in a related protocol Rel-8, that is, an RM(32, O) encoder which generates the matrix shown in FIG. 9.

If only these three encoding structures and at most 128 HARQ-ACK input bits are taken into consideration, then different encoding schemes are adopted aiming at different numbers of HARQ-ACK input bits:

3-RM: 20-32 input bits;

6-RM: 33-64 input bits; and

12-RM: 65-128 input bits.

Second Embodiment

If a terminal uses one PUCCH format to send HARQ-ACKs, it is required to determine a PUCCH resource corresponding to the PUCCH format. In related protocols, resources corresponding to PUCCH formats 1a/1b and 3 used for sending an HARQ-ACK are determined as follows:

For PUCCH formats 1a/1b, there are two resource determination methods, that is, implicit mapping and combined Power Transmission Command (TPC) control field indicators configured by higher layers. For the PDSCH of a corresponding PDCCH/EPDCCH or for a PDCCH/EPDCCH just indicating downlink SPS release, there is an implicit mapping relationship between a corresponding PUCCH resource and the smallest one of the indexes of the CCEs/ECCEs where corresponding PDCCHs/(e)PDCCHs exist, and for a semi-persistently scheduled PDSCH, a corresponding PUCCH resource is determined according to a TPC indication domain in the DCI of a PDSCH activating a down SPS release and a PUCCH resource configured by a higher layer.

For PUCCH format 3, a corresponding PUCCH resource is determined according to the PUCCH format 3 resource of a higher layer and the TPC control field in the DCI of an FDD secondary serving cell or according to the pieces of DCI in a TDD primary serving cell except the piece of DCI of which the value of the DAI is 1 or the combination of the TPC control fields in the DCI of a TDD secondary serving cell. Table 1 shows an example of the foregoing mode, 4 PUCCH format 3 resource values are configured through high-level signaling, a terminal determines, according to the indicator value of a TPC control field in DCI, which one of the PUCCH format 3 resource values configured by a higher layer should be used to feed back an HARQ-ACK using PUCCH format 3, and then determines PRBs and OCC codes for sending PUCCH format 3 according to the determined PUCCH format 3 resource. Table 1 is the resource indication of PUCCH, and as shown in Table 1:

Table 1

| Value of TPC control field in DCI | $n_{\mathrm{PUCCH}}^{(3,\tilde{p})}$ |
|---|---|
| '00' | First higher layer configured PUCCH resource value |
| '01' | Second higher layer configured PUCCH resource value |
| '10' | Third higher layer configured PUCCH resource value |
| '11' | Fourth higher layer configured PUCCH resource value |

For PUCCH format 4, It is also required to determine a resource used for sending PUCCH format 4. For different PUCCH formats 4, for example, first embodiment, it is required to determine the PRB occupied by the frequency domain and the OCC used by the frequency domain for PUCCH formats 4-1 and 4-2, and it is required to determine the PRBs occupied by the frequency domain for PUCCH formats 4-3 and 4-4. Apart from PRB indexes, the PRBs in the frequency domain also refer to the number of the PRBs occupied in a case when PUCCH format 4 occupies a plurality of PRBs. Therefore, resources can be determined for PUCCH format 4 in a way similar to the way of determining resources for PUCCH format 3, that is, a higher layer configures a group of PUCCH format 4 resource values, and then the resources of PUCCH format 4 are indicated by a TPC control field in a piece of DCI. Finally, the terminal determines the PRBs or OCC codes occupied for sending PUCCH format 4 according to a determined PUCCH format 4 resource value.

Third Embodiment

It can be known from the first embodiment that there are four new PUCCH formats 4, and that even the same format may occupy different frequency-domain or code-domain resources, depending upon the number of the bits of the HARQ-ACK to be fed back or the HARQ-ACK performance required to be provided.

According to a related protocol, the number of HARQ-ACK bits required to be fed back is determined according to the number of the serving cells configured and the transmission modes of the configured serving cells, plus a configured uplink-downlink ratio in the case of a TDD system, or plus a reference to an uplink-downlink configuration which is made according to a configured downlink in a case when TDD-FDD aggregation is performed and TDD is a primary serving cell. In a case where at most 32 serving cells are aggregated, the number of the configured serving cells may be a little large while not too many serving cells are actually scheduled, if the number of HARQ-ACK bits required to be fed back is still determined according to the serving cells configured as regulated in a related protocol, then most of the HARQ-ACKs fed back by a terminal are not actually scheduled by a base station, such a feedback of HARQ-ACK bits makes no practical sense for the base station and contrarily is a waste for the sending power of the terminal. Therefore, an optional scheme is provided according to which a terminal determines, according to the number of the PDSCHs/(e)PDCCHs which need to feed back HARQ-ACKs, the number of HARQ-ACK bits required to be fed back. However, this scheme has a problem that if the terminal misses a detection, that is, a corresponding (e)PDCCH is not detected, then a corresponding PDSCH cannot be detected, and consequentially the terminal feeds back no HARQ-ACK. As a consequence, the terminal and the base station have different comprehension on the HARQ-ACKs sent.

Besides, it can be known from the first embodiment that a new PUCCH format consumes more resources than PUCCH format 3, wherein the resources include resources in the frequency domain and the code domain. Thus, if a new PUCCH format is always used in an application scenario where a great amount of carrier aggregation is configured, the utilization rate of resources will not be high. If the number of HARQ-ACK bits required to be actually fed back, for example, an HARQ-ACK whose feedback is determined by a terminal according to the PDSCHs/(e)PDCCHs received, can be carried in PUCCH format 3, then sending the number of HARQ-ACK bits required to be actually fed back using PUCCH format 3 is more effective than then sending the number of HARQ-ACK bits required to be actually fed back using a new PUCCH format. Thus, a switch between a new PUCCH format and PUCCH format 3 should be taken into consideration.

Fourth Embodiment

In a related TDD system, a DAI control field is included in DCI to indicate the number of the PDSCHs which have a corresponding (e)PDCCH and which are scheduled by a base station till the current subframe or the number of the (e)PDCCHs indicating a down SPS release. The main effects of a DAI control field include:

solving the problem of the loss of the last subframe or a plurality of subframes in a bundling window in the case of TDD bundling; and

sorting HARQ-ACK bits in PUCCH format 3.

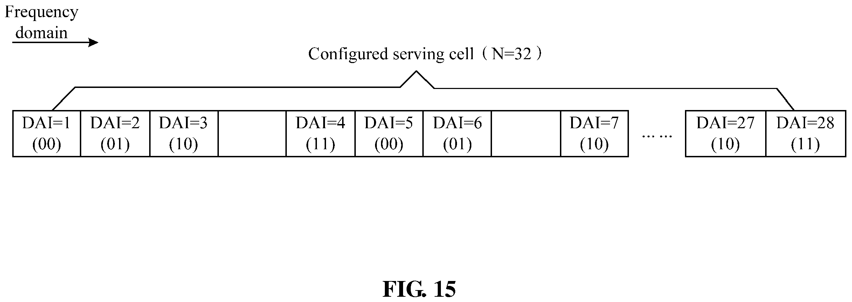

A DAI control field is mainly introduced to address the problem that due to the missed detection of a terminal, the terminal and the base station have different comprehension on the HARQ-ACKs sent.
In the case of a great amount of carrier aggregation, for example, in the case described above, if a terminal determines a number of fed-back HARQ-ACK bits according to the number of the PDSCHs/(e)PDCCHs received, then the problem still occurs that due to the missed detection of a terminal, the terminal and the base station have different comprehension on the HARQ-ACKs sent. Thus, a corresponding mechanism is required to solve this problem.
The introduction of a DAI into an FDD system is one of the solutions. Like in a TDD system, a DAI in an FDD system can also be used to indicate the number of the PDSCHs which are scheduled by a base station according to a certain order till the current serving cell and which have a corresponding (e)PDCCH or the number of the (e)PDCCHs indicating a down SPS release. FIG. 15 is a schematic diagram illustrating a DAI control field in an FDD system according to an optional embodiment of the invention. If it is assumed that a DAI control field consists of 2 bits, then there are at most four states, and a terminal can determine the value of a DAI according to the number of the PDSCHs/(e)PDCCHs received, for example, the terminal can determine that the value of a DAI is 1 if the first '00' is received and that the value of a DAI is 5 if the second '00' is received, so on and so forth. It is assumed here that the probability of occurrence of the missed detection of four successive (e)PDCCHs by a terminal is negligible. Table 2 shows the mapping relationship between the value of a 2-bit DAI control field and an actually expressed DAI value. As shown in Table 2,

Table 2

| Value of DAI feedback mode control field in DCI | Value of DAI |
| --- | --- |
| '00' | 1, 5, 9, 13, 17, 21, 25, 29, ..., 125 |
| '01' | 2, 6, 10, 14, 18, 22, 26, 30, ..., 126 |
| '10' | 3, 7, 11, 15, 19, 23, 27, 31, ..., 127 |
| '11' | 4, 8, 12, 16, 20, 24, 28, 32, ..., 128 |

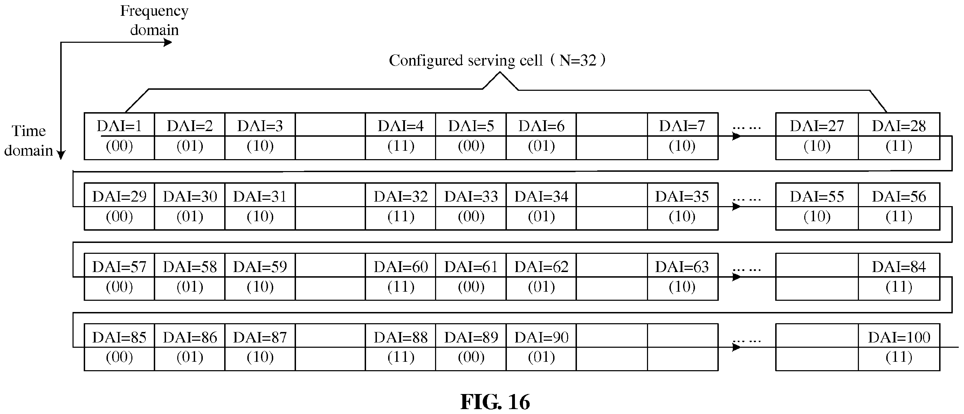

In a TDD system, a related DAI can be extended into a counter functioning first in the frequency domain and then in the time domain, that is, a DAI represents the number of the PDSCHs which have a corresponding (e)PDCCH and which are scheduled by a base station till the current subframe of the current serving cell or the number of the (e)PDCCHs indicating a down SPS release. FIG. 16 is a schematic diagram illustrating an extended DAI control field in a TDD system according to an optional embodiment of the invention.

First sub-Embodiment of fifth embodiment

A base station adds an HARQ-ACK feedback mode control field in DCI to indicate a PUCCH format used by a terminal when the terminal feeds back an HARQ-ACK, and the terminal carries out the following processing:

(1) the terminal determines a PUCCH format used for sending an HARQ-ACK according to a received HARQ-ACK feedback mode control field and determines, according to the determined PUCCH format, the number of HARQ-ACK bits required to be fed back as the maximum number of bits that can be supported by the determined PUCCH format;

(2) the terminal determines, according to the PUCCH resource values configured by a higher layer, including the resource value of PUCCH format 3, that of PUCCH format 4 and a TPC control field in the DCI of which the value of a DAI is greater than k, PUCCH resources used for sending the PUCCH format, including a frequency domain resource (PRB index and PRB format) or a code domain resource (OCC codes);

(3) the terminal sorts HARQ-ACKs according to the received DAIs and determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

(4) the terminal sends the HARQ-ACKs on the PUCCH resources corresponding to the determined PUCCH format.

The number of the bits of the HARQ-ACK feedback mode control field added in the DCI depends on the number of the finally introduced PUCCH formats 4, for example, if only one kind of PUCCH format 4 is introduced, then one bit is enough for indicating which one of PUCCH format 3 and PUCCH format 4 is to be used. The finally introduced PUCCH formats cannot be too many because of complexity, thus, a 2-bit HARQ-ACK feedback mode control field is enough.

It should be noted that if the PUCCH format determined by the terminal according to an HARQ-ACK feedback mode control field cannot bear the HARQ-ACK that is required to be fed back according to a determination performed by the terminal according to the number of the PDSCHs/(e)PDCCHs received, for example, if the PUCCH format determined by the terminal according to the HARQ-ACK feedback mode control field is PUCCH format 3 while the number of HARQ-ACK bits determined by the terminal according to the received PDSCH/(e)PDCCH is 30, then the terminal can determine that a receiving error occurs, in this case, the terminal can reject to send any signal.

It will be assumed by the terminal that the HARQ-ACK feedback mode control fields in all the DCI received are the same. If the HARQ-ACK feedback mode control fields in all the DCI received are different, then the terminal can determine the occurrence of a receiving error, in this case, the terminal can reject to send any signal.

Second sub-embodiment of fifth embodiment

A base station adds an HARQ-ACK feedback mode control field in DCI to indicate the number of HARQ-ACKs a terminal needs to feed back, and the terminal carries out the following processing:

(1) the terminal determines, according to the HARQ-ACK feedback mode control field, the number of HARQ-ACK bits required to be fed back, and determines, according to the number of HARQ-ACK bits required to be fed back, a PUCCH format that can carry the number of HARQ-ACK bits;

(2) the terminal determines, according to the PUCCH resource values configured by a higher layer, including the resource value of PUCCH format 3, that of PUCCH format 4 and a TPC control field in the DCI of which the value of a DAI is greater than k, PUCCH resources used for sending the PUCCH format, including a frequency domain resource (PRB index and PRB format) or a code domain resource (OCC codes);

(3) the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

(4) the terminal sends the HARQ-ACKs on the PUCCH resources corresponding to the determined PUCCH format.

If the HARQ-ACK feedback mode control field added in DCI is used to indicate the number of HARQ-ACKs required to be fed back, the terminal needs to further determine the specific value of the HARQ-ACK feedback mode control field according to a maximum DAI value received or the number of the PDSCHs(E)PDCCHs received. Assume that the HARQ-ACK feedback mode control field consists of two bits, numbers of fed-back HARQ-ACK bits corresponding to the four states of these two bits are shown in the following Table 3:

Table 3

| Value of HARQ-ACK feedback mode control field in DCI | number of HARQ-ACKs required to be fed back |
| --- | --- |
| '00' | 1, 5, 9, 13, 17, 21, 25, 29, ..., 125 |
| '01' | 2, 6, 10, 14, 18, 22, 26, 30, ..., 126 |
| '10' | 3, 7, 11, 15, 19, 23, 27, 31, ..., 127 |
| '11' | 4, 8, 12, 16, 20, 24, 28, 32, ..., 128 |

Assume that the value of the HARQ-ACK feedback mode control field received by the terminal is '01' and the maximum value of the received DAIs by the terminal is 24, the terminal can determine that the number of HARQ-ACK bits required to be fed back is e 26 in the following way: the terminal searches Table 3 for the number of HARQ-ACK bits which is corresponding to '01' and which may be fed back, and finds the smallest one of the values greater than or equal to the maximum DAI value (that is, 24), that is, 26. Moreover, the terminal can determine the loss of the PDCCHs for which DAI=25 and DAI=26.

Two different definitions of an HARQ-ACK feedback mode are exemplified in embodiments 5-1 and 5-2, and which one of the two definitions will be finally adopted for an HARQ-ACK feedback mode is related to the specific structure of the new PUCCH format introduced. Optionally, if the new PUCCH format introduced adopts TBCC as the channel encoding scheme thereof, then the definition of an HARQ-ACK feedback mode control field as the indication of the number of HARQ-ACK bits required to be fed back is better so that the terminal and the base station have the same comprehension on the number of fed back bits and the terminal does not need to determine a number of fed-back HARQ-ACK bits according to the parameters configured (including a configured carrier number, a configured transmission mode and a configured uplink-downlink configuration (refer to downlink)), because in most cases, the number of HARQ-ACK bits which is actually scheduled and which needs to be fed back is above a number of fed-back HARQ-ACK bits determined according to the parameters configured, if the terminal determines a number of fed-back bits according to the actual scheduling situation, then encoding rate is reduced while the detection performance of HARQ-ACK is improved, moreover, it is guaranteed that the base station and the terminal have the same comprehension on the HARQ-ACKs sent by the terminal.

Moreover, if the new PUCCH format introduced adopts a plurality of RM codes as the channel encoding scheme thereof, then the two definitions of HARQ-ACK feedback mode control field are both adoptable. If the HARQ-ACK feedback mode control field is defined as the indication of the number of HARQ-ACK bits required to be fed back, then the terminal selects a multi-RM code structure that can carry the number of HARQ-ACK bits required to be fed back according to the number of HARQ-ACK bits required to be fed back; and if the HARQ-ACK feedback mode control field is defined as the indication of a PUCCH format used for feeding back an HARQ-ACK, then the terminal determines, after determining a PUCCH format to be used, the number of HARQ-ACK bits required to be fed back as the maximum number of bits that can be carried in the determined PUCCH format. In this way, it is guaranteed that the terminal and the base station have the same comprehension on the HARQ-ACKs sent by the terminal.

Sixth Embodiment

A base station indicates, through a TPC control field in related DCI, a PUCCH format used by a terminal when the terminal feeds back an HARQ-ACK and a PUCCH resource corresponding to the PUCCH format.

In an FDD system, the DCI is a piece of DCI sent by a secondary serving cell, and in a TDD system, the DCI is a piece of DCI which is sent in a secondary serving cell in a subframe of a primary serving cell which is different from the one of which the value of the DAI is 1. In the use of the DAI of the fourth embodiment, the DCI is a piece of DCI of which the value of a DAI is greater than 1. It will be assumed by the terminal that the TPC control fields in all the DCI received are the same. If the TCP mode control fields in all the DCI received are different, then the terminal can determine the occurrence of a receiving error, in this case, the terminal can reject to send any signal.

In the use of this mode, the base station and the terminal also need to make an agreement that the TPC control field in DCI is used to indicate a PUCCH format used by the terminal when the terminal feeds back an HARQ-ACK and a PUCCH resource corresponding to the PUCCH format but not only indicate a PUCCH resource value if the base station configures a great amount of CA for the terminal, that is, configures more than 5 serving cells for the terminal. Table 4 shows formats and resource indications of PUCCHs, and as shown in Table 4:

Table 4

| Value of TPC control field in DCI | $n_{\text{PUCCH}}^{(3,\tilde{p})}$ or $n_{\text{PUCCH}}^{(4,\tilde{p})}$ |
|---|---|
| '00' | First higher layer configured PUCCH format 3 resource value |
| '01' | Second higher layer configured PUCCH format 3 resource value |
| '10' | First higher layer configured PUCCH format 4 resource value |
| '11' | Second higher layer configured PUCCH format 4 resource value |

In this way, the increase of a new control field is not required due to the reuse of an existing control field, which is beneficial from the aspect of the overhead of downlink control information. However, because the same number of bits are indicated while h more information is indicated, flexibility is reduced. For example, the former TPC can indicate any one of the four PUCCH resources configured by a higher layer while a TCP mentioned herein can only indicate either of the PUCCH resources configured by a higher layer in the same PUCCH format, thus, flexibility is limited to some degree.

First sub-embodiment of seventh embodiment

A base station indicates, using TPCs in different DCI, an HARQ-ACK feedback mode control field and a PUCCH resource indication control field respectively, and the base station and a terminal agree that a TPC command control field of DCI of which the value of a DAI is greater than 1 and the DAI value is an odd number indicates an HARQ-ACK feedback mode, a TPC command control field of which the DAI value is an even number indicates a PUCCH resource, and an HARQ-ACK feedback mode indicates a PUCCH format used by the terminal when the terminal feeds back an HARQ-ACK, and the terminal carries out the following processing:

the terminal determines a PUCCH format for feeding back an HARQ-ACK according to the TPC command control field of DCI of which the value of a DAI is greater than 1 and the DAI value is an odd number and determines, according to the determined PUCCH format, the number of HARQ-ACK bits required to be fed back as the maximum number of bits that can be supported by the determined PUCCH format;

the terminal determines a PUCCH resource corresponding to the PUCCH format according to the TPC command control field of DCI of which the value of a DAI is greater than 1 and the DAI value is an even number;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

It should be noted that if the DCI of which the value of a DAI is an odd number (except for the DCI whose first DAI is 1) is not received by the terminal or if the maximum value of the DAIs in DCI received by the terminal or the number of the PDSCHs/(e)PDCCHs received by the terminal is not beyond a fourth preset value, then the terminal carries out the following processing:

the terminal determines that a PUCCH format used for feeding back an HARQ-ACK is PUCCH format 3 and that the number of HARQ-ACK bits required to be fed back is the maximum number of HARQ-ACK bits supportable to PUCCH format 3;

the terminal determines a PUCCH resource corresponding to the PUCCH format 3 according to a received TPC command control field for which the value of the DAI is an even number;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

Otherwise, the terminal sends no information, wherein the fourth preset value may be 8.
The terminal sends no information if the DCI of which the value of a DAI is an even number is not received by the terminal.

Second sub-embodiment of seventh embodiment

A base station indicates, using TPCs in different DCI, an HARQ-ACK feedback mode control field and a PUCCH resource indication control field respectively, and the base station and a terminal agree that a TPC command control field of DCI of which the value of a DAI is greater than 1 and the DAI value is an odd number indicates an HARQ-ACK feedback mode, a TPC command control field of which DAI value is an even number indicates a PUCCH resource, and an HARQ-ACK feedback mode control field indicates the number of HARQ-ACKs required to be fed back by the terminal, and the terminal carries out the following processing:

the terminal determines, according to the TPC command control field of DCI of which the value of a DAI is greater than 1 and the DAI value is an odd number, the number of HARQ-ACK bits required to be fed back, and determines, according to the number of HARQ-ACK bits required to be fed back, a PUCCH format that can carry the number of HARQ-ACK bits;

the terminal determines a PUCCH resource corresponding to the PUCCH format according to the TPC command control field of DCI of which the value of a DAI is greater than 1 and the DAI value is an even number;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

It should be noted that if the DCI the value is an odd number (except for the DCI whose first DAI is 1) is not received by the terminal or if the maximum value of the DAIs in DCI received by the terminal or the number of the PDSCHs/(e)PDCCHs received by the terminal is not beyond a fourth preset value, then the terminal carries out the following processing:

the terminal determines that a PUCCH format used for feeding back an HARQ-ACK is PUCCH format 3 and that the number of HARQ-ACK bits required to be fed back is the maximum number of HARQ-ACK bits supportable to PUCCH format 3.

the terminal determines a PUCCH resource corresponding to the PUCCH format 3 according to a received TPC command control field for which the value of the DAI is an even number;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format 3.

Otherwise, the terminal sends no information, wherein the fourth preset value may be 8.
The terminal sends no information if the DCI of which the value of a DAI is an even number is not received by the terminal.

Eighth Embodiment

A base station guarantees, through a scheduling limitation, that the number of HARQ-ACK bits whose feedback is determined by the terminal according to the PDSCHs/(e)PDCCHs received, is not in a range from the difference between the number of HARQ-ACK bits supportable to PUCCH format 3 and a preset value to the sum of the number of HARQ-ACK bits supportable to PUCCH format 3 and the preset value, and the terminal determines a PUCCH format used for feeding back HARQ-ACK according to the number of the PDSCHs/(e)PDCCHs received.
If the number of HARQ-ACK bits whose feedback is determined by the terminal according to the PDSCHs/(e)PDCCHs received is smaller than a first preset value, then the terminal determines the use of PUCCH format 3 for feeding back an HARQ-ACK and determines resources of PUCCH format 3 according to a power transmission command control field in downlink control information; if the number of HARQ-ACK bits whose feedback is determined by the terminal according to the PDSCHs/(e)PDCCHs is greater than a second preset value, then the terminal determines the use of a new PUCCH format for feeding back an HARQ-ACK format and determines resources of the new PUCCH format according to a transmission power command indication domain in downlink information.
It is regulated in a related protocol that the maximum number of HARQ-ACK bits supportable to PUCCH format 3 is 20 bits, meanwhile, it is assumed that a new introduced PUCCH format 4 can support at most 64 HARQ-ACK bits, and a base station and a terminal agree that the terminal uses PUCCH format 3 to feed back an HARQ-ACK when the number of HARQ-ACK bits whose feedback is determined by the terminal according to the PDSCHs/(e)PDCCHs received is smaller than or equal to 16 and the terminal uses PUCCH format 4 to feed back an HARQ-ACK when the number of HARQ-ACK bits whose feedback is determined by the terminal according to the PDSCHs/(e)PDCCHs received is greater than or equal to 24. In the embodiment, the preset value may be 4, that is, during the scheduling of the base station, it must be guaranteed that the number of HARQ-ACK bits whose feedback is determined by the terminal according to the PDSCHs/(e)PDCCHs received is not in a range of (20-4:20+4), wherein brackets represent the exclusion of the two end values of the range. When a DAI is included in DCI, the foregoing scheme can be expressed as follows: when the maximum value of the received DAIs by the terminal is smaller than or equal to a first preset value 16, the terminal uses PUCCH formats 3 to send an HARQ-ACK, and when at least one of the DAI values in the DAI received by the terminal is greater than a second preset value 24, the terminal uses PUCCH format 4 to send an HARQ-ACK. In either case, a PUCCH resource corresponding to the determined PUCCH format is determined according to a TPC control field in the DCI and the PUCCH format resource values configured by a higher layer. It will be assumed by the terminal that the TPC control fields in all the DCI received are the same. If the TCP mode control fields in all the DCI received are different, then the terminal can determine the occurrence of a receiving error, in this case, the terminal can reject to send any information.

First sub-embodiment of eighth embodiment

A base station indicates, according to the current scheduling situation, a PUCCH format to be used and a PUCCH resource corresponding to the PUCCH format with the power control command control fields in different downlink control information, and specifically,
when the number of the PDSCHs/(E)PDCCHs scheduled by the base station is greater than a first preset value, a control field used for a terminal to determine an HARQ-ACK feedback domain is a TPC command control field of DCI of which a DAI control field value is greater than 1 and the DAI control field value is an even number, and a control field used for a terminal to determine a PUCCH resource for feeding back an HARQ-ACK is a TPC command control field of DCI of which a DAI control field value is greater than 1 and the DAI control field value is an odd number, wherein the odd number and the even number can be exchanged, the values of all the control fields that are used for the terminal to determine an HARQ-ACK feedback mode control field are the same, and the values of all the resource control fields that are used for the terminal to determine a PUCCH format for feeding back an HARQ-ACK are the same but different from the values of the control fields used for the terminal to determine an HARQ-ACK feedback mode.
When the number of the PDSCHs/(E)PDCCHs scheduled by the base station is smaller than or equal to the first preset value, the base station and the terminal agree that PUCCH format 3 is used for feeding back an HARQ-ACK and a control field used for the terminal to determine a PUCCH resource for feeding back an HARQ-ACK is a TPC command control field of DCI of which a DAI control field value is greater than 1.
For the terminal, when the DCI received by the terminal includes a DAI control field and the maximum value of the DAIs in the DCI received by the terminal or the number of the PDSCHs/(E)PDCCHs received by the terminal is greater than the first preset value, according to the agreement with the base station, a TPC command control field of DCI of which the value of a DAI is greater than 1 and the value is an odd number indicates an HARQ-ACK feedback mode control field, and a TPC command control field of DCI of which the value of a DAI is greater than 1 and the value is an even number indicates a PUCCH resource indication control field, wherein the HARQ-ACK feedback mode control field indicates a PUCCH format used by the terminal for feeding back an HARQ-ACK, and the terminal may carry out the following processing:

the terminal determines a PUCCH format for feeding back an HARQ-ACK according to the TPC command control field of DCI of which the value of a DAI is greater than 1 and the DAI value is an odd number and determines, according to the determined PUCCH format, the number of HARQ-ACK bits required to be fed back as the maximum number of bits that can be supported by the determined PUCCH format;

the terminal determines a PUCCH resource corresponding to the PUCCH format according to the TPC command control field of DCI of which the value of a DAI is greater than 1 and the DAI value is an even number;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

If the DCI received by the terminal includes a DAI control field and the maximum value of the DAIs included in DCI received by the terminal or the number of the PDSCHs/(E)PDCCHs received by the terminal is smaller than or equal to the first preset value, then according to an agreement with the base station, a TPC command control field of DCI of which the DAI value is greater than 1 is used to indicate the resource indication control field of PUCCH format 3, the terminal carries out the following processing:

the terminal determines that a PUCCH format used for feeding back an HARQ-ACK is PUCCH format 3 and that the number of HARQ-ACK bits required to be fed back is the maximum number of HARQ-ACK bits supportable to PUCCH format 3;

the terminal determines a PUCCH resource corresponding to the PUCCH format according to the TPC command control field in the DCI of which the value of a DAI is greater than 1;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

Alternatively, for an FDD system including no DAI, the base station and the terminal agree that a TPC control field in the DCI whose secondary serving cell index is an odd/even number indicates a PUCCH format to be used and that a TPC control field in the DCI whose secondary serving cell index is an even/odd number indicates a resource corresponding to the PUCCH format.

It will be assumed by the terminal that the TPC control fields which are included in DCI to indicate the same information are the same, that is, all the TPC control fields that are used to indicate an HARQ-ACK feedback mode are the same, and all the TPC control fields used to indicate a PUCCH resource are also the same.

Second sub-embodiment of eighth embodiment

A base station indicates, according to the current scheduling situation, a PUCCH format to be used and a PUCCH resource corresponding to the PUCCH format with the power control command control fields in different downlink control information, and specifically,

when the number of the PDSCHs/(E)PDCCHs scheduled by the base station is greater than a first preset value, a control field used for a terminal to determine an HARQ-ACK feedback domain is a TPC command control field of DCI of which a DAI control field value is greater than 1 and the DAI control field value is an even number, and a control field used for a terminal to determine a PUCCH resource for feeding back an HARQ-ACK is a TPC command control field of DCI of which a DAI control field value is greater than 1 and the DAI control field value is an odd number, wherein the odd number and the even number can be exchanged, the values of all the control fields that are used for the terminal to determine an HARQ-ACK feedback mode are the same, the values of all the resource control fields that are used for the terminal to determine a PUCCH format for feeding back an HARQ-ACK are the same but different from the values of the control fields used for the terminal to determine an HARQ-ACK feedback mode.

When the number of the PDSCHs/(E)PDCCHs scheduled by the base station is smaller than or equal to the first preset value, the base station and the terminal agree that PUCCH format 3 is used for feeding back an HARQ-ACK and that a control field used for the terminal to determine a PUCCH resource for feeding back an HARQ-ACK is a TPC command control field of DCI of which a DAI control field value is greater than 1.

For the terminal, if the DCI received by the terminal includes a DAI control field and the maximum value of the DAIs in the DCI received by the terminal or the number of the PDSCHs/(E)PDCCHs received by the terminal is greater than the first preset value, then according to an agreement with the base station, a TPC command control field of DCI of which the value of a DAI is greater than 1 and the value is an odd number indicates an HARQ-ACK feedback mode control field, and a TPC command control field of DCI of which the value of a DAI is greater than 1 and the value is an even number indicates a PUCCH resource indication control field, wherein the HARQ-ACK feedback mode control field indicates the number of the HARQ-ACKs a terminal needs to feed back, the terminal may carry out the following processing:

the terminal determines, according to the TPC command control field of DCI of which the value of a DAI is greater than 1 and the DAI value is an odd number, the number of HARQ-ACK bits required to be fed back, and determines, according to the number of HARQ-ACK bits required to be fed back, a PUCCH format that can carry the number of HARQ-ACK bits;

the terminal determines a PUCCH resource corresponding to the PUCCH format according to the TPC command control field of DCI of which the value of a DAI is greater than 1 and the DAI value is an even number;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

If the DCI received by the terminal includes a DAI control field and the maximum value of the DAIs included in DCI received by the terminal or the number of the PDSCHs/(E)PDCCHs received by the terminal is smaller than or equal to the first preset value, then according to an agreement with the base station, a TPC command control field of DCI of which the DAI value is greater than 1 is used to indicate the resource indication control field of PUCCH format 3, the terminal carries out the following processing:

the terminal determines that a PUCCH format used for feeding back an HARQ-ACK is PUCCH format 3 and that the number of HARQ-ACK bits required to be fed back is the maximum number of HARQ-ACK bits supportable to PUCCH format 3.

the terminal determines a PUCCH resource corresponding to the PUCCH format according to the TPC command control field of DCI of which the value of a DAI is greater than 1;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

Alternatively, for an FDD system including no DAI, the base station and the terminal agree that a TPC control field of DCI whose secondary serving cell index is an odd/even number indicates a PUCCH format to be used and that a TPC control field of DCI whose secondary serving cell index is an even/odd number indicates a resource corresponding to the PUCCH format,

It will be assumed by the terminal that the TPC control fields which are included in DCI to indicate the same information are the same, that is, all the TPC control fields that are used to indicate an HARQ-ACK feedback mode are the same, and all the TPC control fields used to indicate a PUCCH resource are also the same.

Ninth Embodiment

When the number of the PDSCHs/(E)PDCCHs scheduled is smaller than or equal to a second preset value, the base station and the terminal agree, according to a scheduling situation, that PUCCH format 3 is used to feed back an HARQ-ACK and a TPC command control field of DCI of which a DAI control field value is greater than 1 is used as a control field used for the terminal to determine a PUCCH resource for feeding back an HARQ-ACK, wherein the PUCCH resource refers to PUCCH format 3;

When the number of the PDSCHs/(E)PDCCHs scheduled by the base station is greater than a third preset value, the base station and the terminal agree to use a new PUCCH format to feed back an HARQ-ACK and use a TPC command control field in the DCI of which a DAI control field value is greater than 1 as a control field used for the terminal to determine a PUCCH resource for feeding back an HARQ-ACK;

The values of the control fields used for the terminal to determine a PUCCH resource for feeding back an HARQ-ACK are all the same, wherein the third preset value is greater than the second preset value, and the second preset value may be a maximum number of HARQ-ACK bits supported to be fed back in PUCCH format 3.

It is guaranteed by the base station that the number of the PDSCHs/(e)PDCCHs scheduled is not in a range from the second preset value to the third present value.

If the DCI received by the terminal includes a DAI control field and the maximum value of the DAIs included in DCI received by the terminal or the number of the PDSCHs/(E)PDCCHs received by the terminal is smaller than or equal to the second preset value, then according to an agreement with the base station, a TPC command control field of DCI of which DAI value is greater than 1 is used to indicate the resource indication control field of PUCCH format 3, the terminal carries out the following processing:

the terminal determines that a PUCCH format used for feeding back an HARQ-ACK is PUCCH format 3 and that the number of HARQ-ACK bits required to be fed back is the maximum number of HARQ-ACK bits supportable to PUCCH format 3;

the terminal determines a PUCCH resource corresponding to the PUCCH format 3 according to a TPC command control field of DCI of which the value of a DAI is greater than k;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

If the DCI received by the terminal includes a DAI control field and the maximum value of the DAIs included in DCI received by the terminal or the number of the PDSCHs/(E)PDCCHs received by the terminal is greater than the third preset value, then according to an agreement with the base station, a TPC command control field of DCI of which the DAI value is greater than 1 is used to indicate the resource indication control field of a new PUCCH format, the terminal carries out the following processing:

the terminal determines that a PUCCH format used for feeding back an HARQ-ACK is a new PUCCH format and that the number of HARQ-ACK bits required to be fed back is the maximum number of HARQ-ACK bits supportable to the new PUCCH format;

the terminal determines a PUCCH resource corresponding to the PUCCH format according to the TPC command control field of DCI of which the value of a DAI is greater than 1;

the terminal sorts HARQ-ACKs according to the received DAIs, determines, according to a detection result, a state corresponding to an HARQ-ACK bit position to be ACK or NACK, and sets a state corresponding to an HARQ-ACK bit position where a corresponding PDSCH/(E)PDCCH is not received to be NACK; and

the terminal sends the HARQ-ACKs on the PUCCH resource corresponding to the determined PUCCH format.

Tenth Embodiment

For a base station, the base station includes a downlink scheduling related control field in the DCI sent by the base station, and the implementation may be as follows:

for an FDD system, the base station adds a DAI control field in DCI, the new added DAI control field represents, in the first N pieces of DCI, the number of the serving cells scheduled in the current subframe according to a preset order (a DAI representing a total number) and represent, in the following pieces of DCI after the Nth DCI, the number of the scheduled PDSCHs which have a PDCCH/EPDCCH or the number of PDCCHs/EPDCCHs indicating downline SPS release, wherein the preset order is the ascending order of the indexes of serving cells.

For a TDD system, a control field indicating information related to downlink scheduling is a DAI control field, the DAI control fields in the same subframe represent, in the first N pieces of DCI, the number of the serving cells scheduled in the current subframe according to a preset order (a DAI representing a total number) and represent, in the following pieces of DCI after the Nth DCI, the number of the scheduled PDSCHs which have a PDCCH/EPDCCH or the number of PDCCHs/EPDCCHs indicating downlink SPS release, wherein the preset order is the ascending order of the indexes of serving cells, and the values of the DAIs in the first n pieces of DCI are the same.

A control field used for the terminal to determine the a PUCCH resource for feeding back an HARQ-ACK is a TCP command control field included in the downlink control information of a secondary serving cell, wherein the PUCCH resource is PUCCH format 3 or a new PUCCH format.

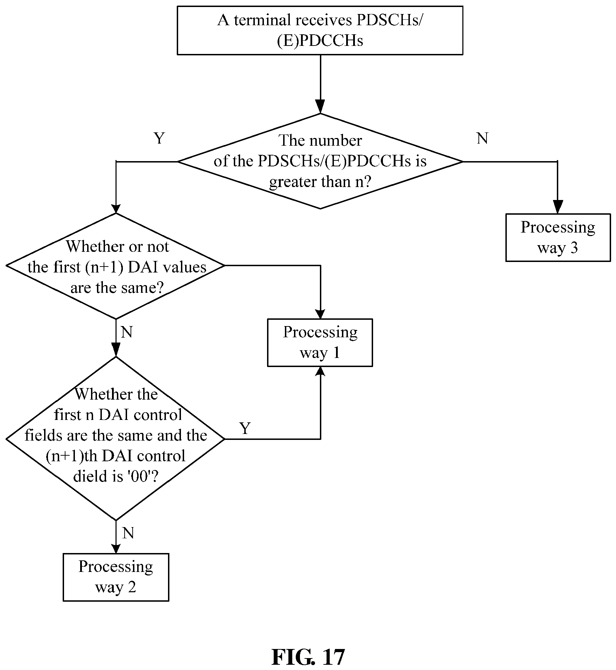

For a terminal, if the DCI received by the terminal includes a DAI control field, and the terminal agrees with a base station to indicate, for an FDD system, the number of the serving cells scheduled in the current subframe according to a preset order with the DAI control fields in the first N pieces of DCI received by the terminal and the number of the scheduled PDSCHs which have a PDCCH/EPDCCH or the number of PDCCHs/EPDCCHs indicating downlink SPS release with the DAI control fields included in the following pieces of DCI after the Nth DCI, and indicate, for a TDD system, the number of the serving cells scheduled in the current subframe according to a preset order with the DAI control fields in the first N pieces of DCI received by the terminal and the number of the scheduled PDSCHs which have a PDCCH/EPDCCH or the number of PDCCHs/EPDCCHs indicating downlink SPS release with the DAI control fields included in the following pieces of DCI after the Nth DCI, wherein the preset order is the ascending order of the indexes of serving cells, the TPC command control field in the DCI received by a secondary serving cell is used to indicate the resource indication control field of PUCCH format 3 or a new PUCCH format; FIG. 17 is a flowchart illustrating the flow of a receiving processing performed by a terminal according to an optional embodiment of the invention, and as shown in FIG. 17,

For each downlink subframe, if the number of PDCCHs bearing DCI, which are received by the terminal, is greater than n, then it is determined whether or not the DAI control fields in the first (n+1) pieces of DCI received are the same, if the DAI control fields in the first (N+1) pieces of DCI received are the same, the subsequent processing is performed in the following processing way 1,

otherwise, whether or not the DAI control fields in the first n pieces of DCI received are the same is further determined, if the DAI control fields in the first n pieces of DCI received are the same and the DAI control field in the (n+1)th piece of DCI is '00', then the subsequent processing is performed in the following processing way 1,

otherwise, the subsequent processing is performed in the following processing way 2.

For each downlink subframe, if the number of PDCCHs bearing DCI, which are received by the terminal, is smaller than or equal to n, then the subsequent processing is performed in the following processing way 3.

Processing way 1: the terminal determines that the first n pieces of DCI of a subframe are not lost, determines, according to the DAIs in the first n pieces of DCI and the maximum value of the received DAIs by the current subframe or the number of the PDSCH/(E)PDCCHs received, the number of HARQ-ACK bits required to be fed back in the current subframe, wherein the states of the first n HARQ-ACK feedback bit positions are set to be ACK or NACK according to the result of detection of the first N PDSCHS/(E)PDCCHs, the terminal sorts, starting from the (n+1)th HARQ-ACK, the HARQ-ACKs according to the received DAIs subsequent to the (n+1)th DAI, determines a state corresponding to an HARQ-ACK bit position to be ACK or NACK, and sets a state corresponding to an HARQ-ACK bit position where a corresponding PDSCH/(E)PDCCH is not received to be NACK;

Processing way 2: the terminal determines that a loss occurs to the first (n+1) PDCCHs of a subframe, the terminal determines, according to the DAI in the first piece of DCI and the maximum value of the received DAIs by the current subframe or the number of the PDSCH/(E)PDCCHs received, the number of HARQ-ACK bits required to be fed back in the current subframe, then determines, according to the DAI control field included in the first piece of DCI of which the value of the DAI is different from that of the foregoing DAI, the number of the PDSCHs/(E)PDCCHs scheduled corresponding to the DAI, marks the number as X, sets the states of the first (X-1) HARQ-ACK feedback bit positions to be NACK, sorts, starting from the Xth HARQ-ACK, HARQ-ACKs according to the received DAIs, and sets a state corresponding to an HARQ-ACK bit position to be ACK or NACK according to a detection result and a state corresponding to an HARQ-ACK bit position where a corresponding PDSCH/(E)PDCCH is not received to be NACK;

Processing way 3: the terminal determines, according to the DAI in the first piece of DCI and the number of the PDSCHs/(E)PDCCHs currently received, the number of HARQ-ACK bits required to be fed back in the current subframe, sets, if the determined number of HARQ-ACK bits required to be fed back in the current subframe is different from the number of the PDSCHs/(E)PDCCHs received, the states of the HARQ-ACK bit positions that need to fed back to be NACK, or sets, if the determined number of HARQ-ACK bits required to be fed back in the current subframe is equal to the number of the PDSCHs/(E)PDCCHs received, the states corresponding to corresponding HARQ-ACK bit positions to be ACK or NACK according to a preset order based on a detection result.

For a TDD system, the number of HARQ-ACK bits required to be fed back in each downlink subframe should be added up after being determined so as to determine a total number of HARQ-ACK bits required to be fed back. Then, a PUCCH format that can carry the determined number of HARQ-ACK bits required to be fed back is determined according to the determined number of HARQ-ACK bits.

A PUCCH resource corresponding to the PUCCH format is determined according to the TPC command control field of a secondary serving cell.

HARQ-ACKs are sent on the PUCCH resource corresponding to the determined PUCCH format.

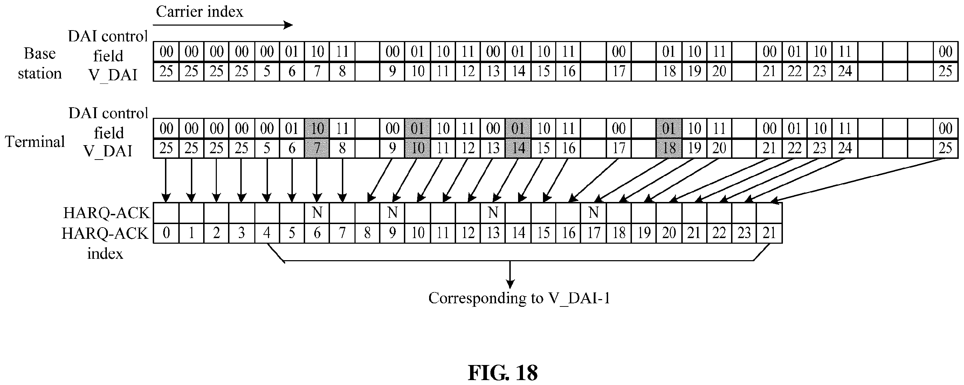

To be understood better, the embodiment is described further below with reference to FIG. 18.

FIG. 18 is a schematic diagram illustrating the carriers configured by a base station and a terminal according to an optional embodiment of the invention, and as shown in FIG. 18, it is assumed that 32 carriers are configured at the side of a base station and the foregoing n is 4. A base station totally schedules 25 PDSCHs having a corresponding (E)PDCCH, it can be determined according to the relationship between the DAI control fields shown in Table 2 and corresponding DAI values that the base station will set the DAI control fields included in DCI born by the first four (E)PDCCHs to be '00' during a sending process, DAIs, starting with the fifth DAI, are sequentially and repeatedly numbered, and DAI values corresponding to the DAIs are set as shown in the row 'DAI value' shown in FIG. 14, and it can be seen from FIG. 18 that the maximum value of DAIs is 25.

For the terminal, there may be many receiving situations:

Receiving situation 1: as shown in FIG. 14, in a case when the number of the PDSCHs(E)PDCCHs received is greater than 4, if it is assumed that 21 PDSCHs/(E)PDCCHs are received and the values of the DAI control fields in the first 5 DAIs received are the same, then the terminal carries out the following processing in the foregoing processing way 1:

(1) the determination of a number of fed-back HARQ-ACK bits: the terminal determines that no loss occurs to the first four pieces of DCI of the current subframe and synchronously determines that each DAI in the first four pieces of DCI is a DAI representing a total number and that the DAI in the fifth piece of DCI is a DAI representing a counter, because the values of the first five DAI control fields are '00', corresponding DAI values(represented with V_DAI) are 5, the maximum value of the received DAIs can be determined to be 25 according to the DCI received later, moreover, based on the fact that the values of the DAI control fields in the first four pieces of DCI are '00' and the maximum value of the received DAIs by the current subframe is 25, the number of HARQ-ACK bits required to be fed back is determined in the following way: determining, by looking up Table 2, that a total DAI control field being '00' represents the total number of the scheduled PDSCHs/(E)PDCCHs being 1, 5, 8, 13, 17, 21, 25, 29, ... 125, and then determining the smallest one of the values greater than or equal to the maximum DAI value 25 to be 25. The number of HARQ-ACK bits required to be fed back can be determined according to the values of the first four DAIs and the number of the PDSCHs/(E)PDCCHs received or according to the values of the first four DAIs and the maximum value of the following DAIs. In the example shown in FIG. 14, if the number of HARQ-ACK bits required to be fed back is determined according to the values of the first four DAIs and the number of the PDSCHs/(E)PDCCHs received, then the terminal determines that 21 HARQ-ACK bits need to be fed back, the terminal makes the foregoing determination in the following way: the terminal determines, by looking up Table 2, that a total DAI control field being '00' represents the total number of the scheduled PDSCHs/(E)PDCCHs being 1, 5, 8, 13, 17, 21, 25, 29, ... 125, then determines the smallest one of the values greater than or equal to the maximum DAI value 21 to be 21, and therefore determines that the number of HARQ-ACK bits required to be fed back in the current subframe is 21, however, if the number of HARQ-ACK bits required to be fed back is determined according to the values of the first four DAIs and the maximum value of the following DAIs, then the terminal determines that 25 HARQ-ACK bits need to be fed back, the terminal makes the foregoing determination in the following way: the terminal determines, by looking up Table 2, that a total DAI control field being '00' represents the total number of the scheduled PDSCHs/(E)PDCCHs being 1, 5, 8, 13, 17, 21, 25, 29, ... 125, determines the smallest one of the values greater than or equal to the maximum DAI value 25 to be 25, and therefore determines that the number of HARQ-ACK bits required to be fed back in the current subframe is 25. Thus, when the number of bits required to be fed back is different when determined in the foregoing ways, the bigger one is adopted. As a result, the number of HARQ-ACK bits should be determined according to the values of the first four DAIs and max(the number of the PDSCHs/(e)PDCCHs received, the maximum value of DAIs).

(2) the determination of an HARQ-ACK feedback state: because no loss occurs to the first four pieces of DCI, the states of the first four fed-back HARQ-ACK bits are set to be ACK or NACK according to the result of detection of the first four PDSCHs/(E)PDCCHs, and the HARQ-ACKs starting with the fifth HARQ-ACK are sorted according to the fifth and the following DAIs received, and a state corresponding to an HARQ-ACK bit position is determined to be ACK or NACK according to the result of the detection, wherein a state corresponding to an HARQ-ACK bit position where a corresponding PDSCH/(E)PDCCH is not received is set to be NACK, as shown in FIG. 18, the HARQ-ACK bit positions 6, 9, 13 and 19 which are corresponding to DAI values 7, 10, 14 and 18 (inconformity is caused by the difference in the starting numbers of the bit positions and those of the DAI values) are set to be NACK.

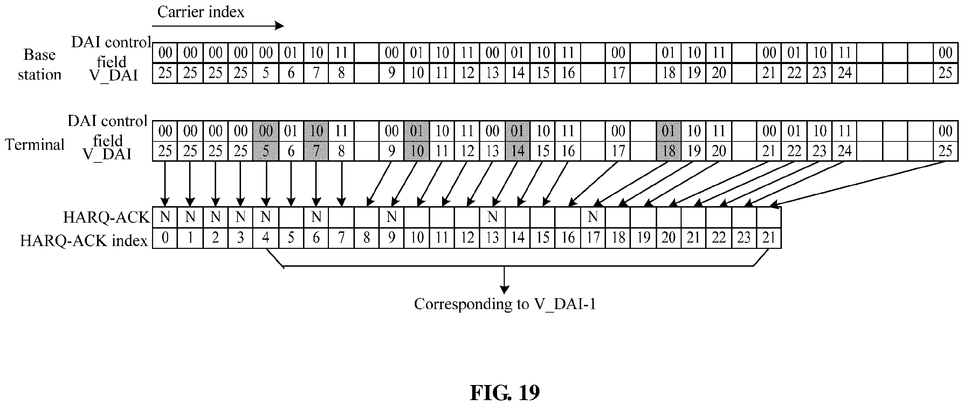

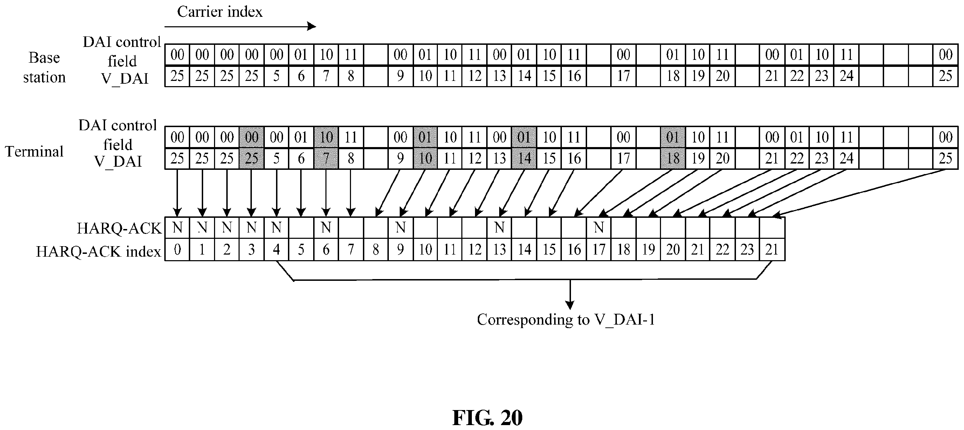

Receiving situation 2: FIG. 19 is a schematic diagram 1 illustrating the number of the PDSCHs/(E)PDCCHs received by a terminal according to an optional embodiment of the invention, FIG. 20 is a schematic diagram 2 illustrating the number of the PDSCHs/(E)PDCCHs received by a terminal according to an optional embodiment of the invention, as shown in FIG. 19 or 20, in a case when the number of the PDSCHs/(e)PDCCHs received is greater than 4, if it is assumed that 20 PDSCHs/(E)PDCCHs are received and the values of the DAI control fields in the first four pieces of DCI are the same, all being '00', while the value of the DAI control field in the fifth piece of DCI is 2, then the terminal carries out the following processing in the foregoing processing way 2:

(1) the determination of a number of fed-back HARQ-ACK bits: the terminal determines that a loss occurs to the first five pieces of DCI of the current subframe, for example, the first DAI representing a counter is lost, as shown in FIG. 19, or the third DAI representing a total number is lost, as shown in FIG. 20, however, the terminal cannot distinguish the two cases. Nonetheless, the terminal can determine that the first three DAIs received are all DAIs representing a total number and the first DAI different from the first three DAIs is a DAI representing a counter, thus, the terminal can determine, according to the fact that the value of a DAI control field representing a total number is '00' and the maximum value of the received DAIs by the current subframe is 25, that the number of HARQ-ACK bits required to be fed back in the current subframe is 25.

(2) the determination of an HARQ-ACK feedback state: because the terminal determines that a loss occurs to the first five pieces of DCI of the current subframe but cannot determine which one of the five pieces of DCI suffers the loss, if the value of the first DAI that is different from the former DAIs is 6, as shown in FIG. 15, then the terminal sets the states of the first (6-1=5) five HARQ-ACK feedback bit positions to be NACK, sorts, starting from the sixth HARQ-ACK, HARQ-ACKs according to the received DAIs, and determines, according to a detection result, the states corresponding to corresponding HARQ-ACK bit positions to be ACK or NACK, wherein a state corresponding to an HARQ-ACK bit position where a corresponding PDSCH/(E)PDCCH is not received is set to be NACK, as shown in FIG. 19.

As shown in FIG. 20, because the first DAI different from the former DAIs is 6, an HARQ-ACK feedback state is determined in the way shown in FIG. 19.

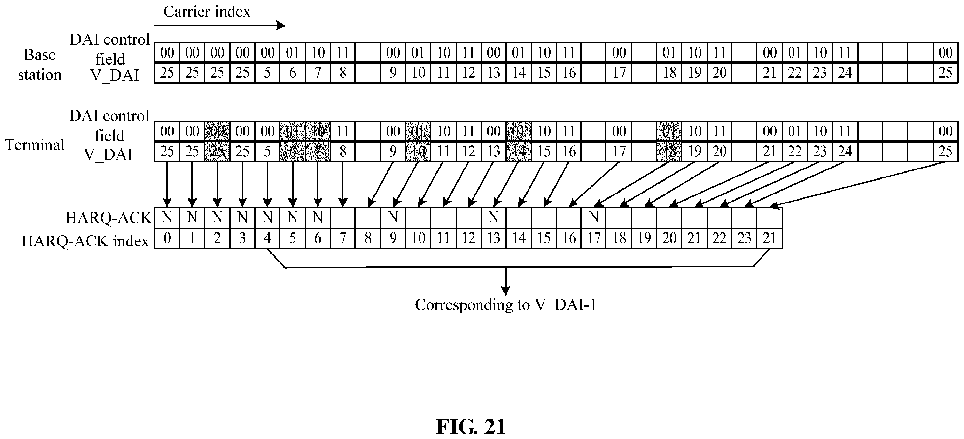

FIG. 21 is a schematic diagram 3 illustrating the number of the PDSCHs/(E)PDCCHs received by a terminal according to an optional embodiment of the invention, as shown in FIG. 21, in a case when the number of the PDSCHs/(e)PDCCHs received is greater than 4, if it is assumed that 19 PDSCHs/(E)PDCCHs are received and the values of the DAI control fields in the first three pieces of DCI are the same, all being '00', while the DAI control field in the fifth piece of DCI is '10', then the terminal carries out the following processing in the foregoing processing way 2:

(1) the determination of a number of fed-back HARQ-ACK bits: a number of fed-back HARQ-ACK bits is determined in the way illustrated in FIG. 19 or 20, thus, the determination is not described here repeatedly;

(2) the determination of an HARQ-ACK feedback state: because the value of the first DAI that is different from the former DAIs is 7, the terminal sets the states of the first (7-1=6) six HARQ-ACK feedback bit positions to be NACK, sorts, starting from the seventh one, the HARQ-ACKs according to the received DAIs, and determines, according to a detection result, the states corresponding to corresponding HARQ-ACK bit positions to be ACK or NACK, wherein a state corresponding to an HARQ-ACK bit position where a corresponding PDSCH/(E)PDCCH is not received is set to be NACK, as shown in FIG. 21.

It should be noted that it is assumed here that at most (n-1) PDSCHs/(E)PDCCHs are lost when the terminal receives the first 2n PDSCHs/(E)PDCCHs sent by the base station, the loss of n or more PDSCHs/(E)PDCCHs is not taken into consideration in the scheme because this situation is considered as a small probability event. For the PDSCHs/(E)PDCCHs sent subsequent to the first 2n PDSCHs/(E)PDCCHs, this scheme is applicable as long as the loss of four successive PDSCHs/(E)PDCCHs does not occur, and the loss of four successive PDSCHs/(E)PDCCHs is not taken into consideration in the scheme either.

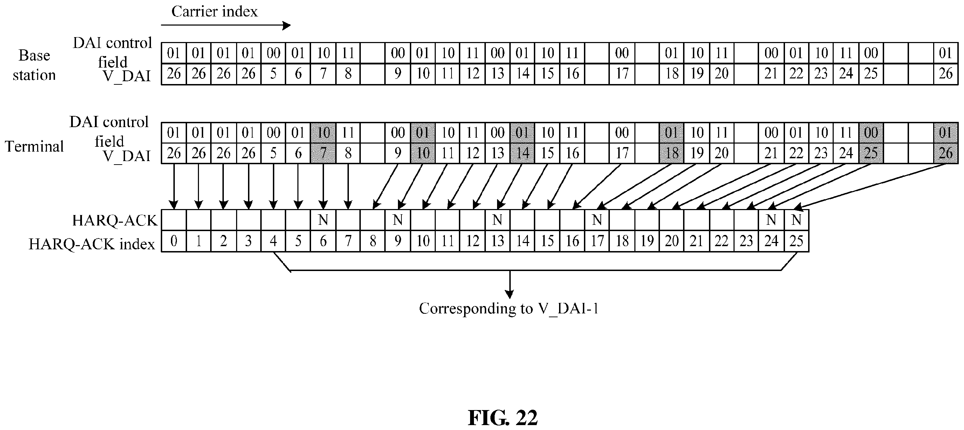

Receiving situation 4: FIG. 22 is a schematic diagram 4 illustrating the number of the PDSCHs/(E)PDCCHs received by a terminal according to an optional embodiment of the invention, and as shown in FIG. 22, it is assumed that 32 carriers are configured at the side of a base station and the foregoing n is 4. The base station totally schedules 26 PDSCHs having a corresponding (E)PDCCH, it can be determined according to the relationship between the DAI control fields shown in Table 2 and corresponding DAI values that the base station sets the DAI control fields in the DCI of the first four (E)PDCCHs to be '01' during a sending process, DAIs starting with the fifth DAI are sequentially and repeatedly numbered, and corresponding DAI values are set as shown in the row 'DAI value' shown in FIG. 22.

For the terminal: in a case when the number of the PDSCHs(E)PDCCHs received is greater than 4, if it is assumed that 19 PDSCHs/(E)PDCCHs are received, the values of the DAI control fields in the first 4 DAIs received are the same and the second DAI control field received is '00', then the terminal carries out the following processing in the foregoing processing way 1:

(1) the determination of a number of fed-back HARQ-ACK bits: the terminal determines that no loss occurs to the first four pieces of DCI of the current subframe and the DAI value (represented with V_DAI in FIG. 22) corresponding to the fifth DAI control field value '00' is 5, determines, according to the DCI received later, the maximum value of the received DAIs is 24, and determines, according to the fact that the values of the DAI control fields in the first four pieces of DCI are '01' and the maximum value of the received DAIs by the current subframe is 24, that the number of HARQ-ACK bits required to be fed back in the current subframe is 26; the determination is made in the following way: the terminal determines, by looking up Table 2, that a total DAI control field being '01' represents the total number of the scheduled PDSCH/(E)PDCCH being 2, 6, 10, 14, 18, 22, 26, 30, ... 126, and the smallest one of the values greater than the maximum DAI value is 25, thus, the terminal determines that the number of HARQ-ACK bits required to be fed back in the current subframe is 26. The number of fed-back HARQ-ACK bits can be determined according to the values of the first four DAIs and the number of the PDSCHs/(e)PDCCHs received or according to the values of the first four DAIs and the maximum values of the following DAIs, in the example shown in FIG. 18, if the number of HARQ-ACK bits required to be fed back is determined according to the values of the first four DAIs and the number of the PDSCHs/(e)PDCCHs received, then the terminal determines that 22 HARQ-ACK bits need to be fed back, however, if the number of HARQ-ACK bits required to be fed back is determined according to the values of the first four DAIs and the maximum value of the following DAIs, then the terminal determines that 26 HARQ-ACK bits need to be fed back, thus, when the number of bits required to be fed back is different when determined in the foregoing ways, the bigger one is adopted.

(2) the determination of an HARQ-ACK feedback state: because no loss occurs to the first four pieces of DCI, the states of the first four fed-back HARQ-ACK bits are set to be ACK or NACK according to the result of detection of the first four PDSCHs/(E)PDCCHs, and the HARQ-ACKs starting with the fifth HARQ-ACK are sorted according to the fifth and the following DAIs, and a state corresponding to an HARQ-ACK bit position is determined to be ACK or NACK according to the result of the detection, wherein a state corresponding to an HARQ-ACK bit position where a corresponding PDSCH/(E)PDCCH is not received is set to be NACK, as shown in FIG. 22.

Receiving situation 5:

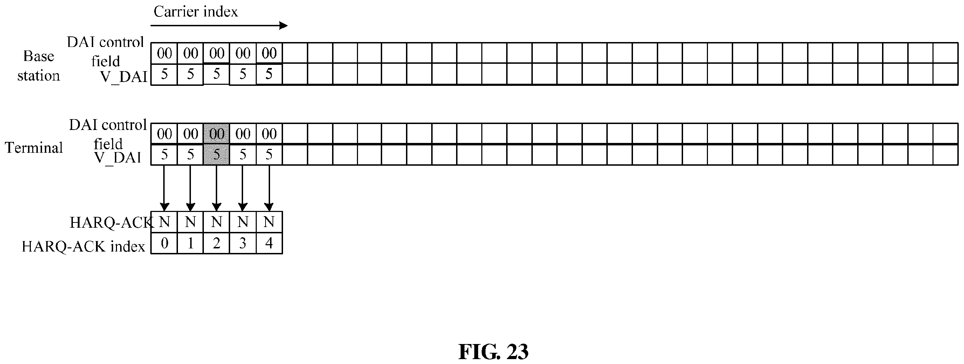

FIG. 23 is a schematic diagram 5 illustrating the number of the PDSCHs/(E)PDCCHs received by a terminal according to an optional embodiment of the invention, and as shown in FIG. 23, it is assumed that 32 carriers are configured at the side of a base station and the foregoing n is 4. The base station totally schedules 5 PDSCHs having a corresponding (E)PDCCH, it can be determined according to the relationship between the DAI control fields shown in Table 2 and corresponding DAI values that the base station will set the DAI control fields in the DCI of the first four (E)PDCCHs to be '01' during a sending process, DAIs starting with the fifth DAI are sequentially and repeatedly numbered, and corresponding DAI values are set as shown in the row 'DAI value' shown in FIG. 23.
For the terminal, in a case when the number of the PDSCHs(E)PDCCHs received is smaller than or equal to 4, if it is assumed that 4 PDSCHs/(E)PDCCHs are received, then the terminal cannot determine whether or not a DAI representing a counter is received, thus, the terminal carries out the following processing in the foregoing processing way 3:

(1) the determination of a number of fed-back HARQ-ACK bits: the terminal determines a number of fed-back HARQ-ACK bits according to the DAI in the first piece of DCI and the number of the PDSCHs/(E)PDCCHs currently received, the determination is made as follows: the terminal determines, by looking up Table 2, that a total DAI control field being '00' represents the total number of the PDSCHs/(E)PDCCHs received being 1, 5, 9, 13, 17, 21, 25, 29,...,125, determines that the smallest one of the values greater than the number of the PDSCHs/(E)PDCCHs currently received is 5, and therefore determines that the number of HARQ-ACK bits required to be fed back in the current subframe is 5.

(2) the determination of an HARQ-ACK feedback state: because the determined number of HARQ-ACK bits required to be fed back, that is, 5, is not equal to the number of the PDSCHs/(E)PDCCHs received, that is, 4, the HARQ-ACK bit positions that need to be fed back are all set to be NACK, as shown in FIG. 23.

Receiving situation 6:

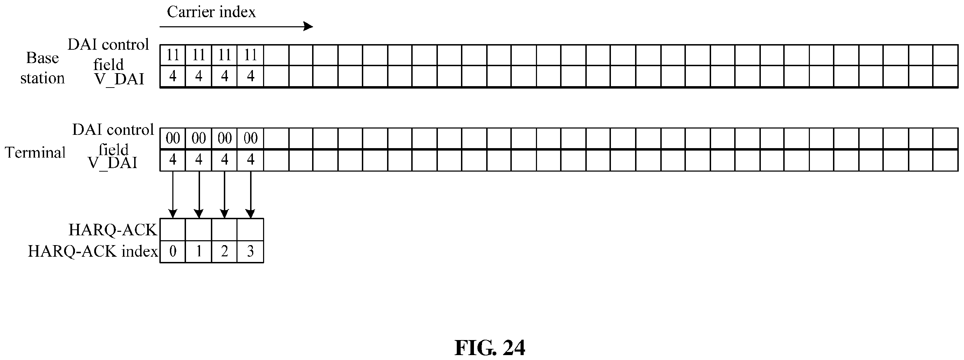

FIG. 24 is a schematic diagram 6 illustrating the number of the PDSCHs/(E)PDCCHs received by a terminal according to an optional embodiment of the invention, and as shown in FIG. 24, it is assumed that 32 carriers are configured at the side of a base station and the foregoing n is 4. The base station totally schedules 4 PDSCHs having a corresponding (E)PDCCH, it can be determined according to the relationship between the DAI control fields shown in Table 2 and corresponding DAI values that the base station will set the DAI control fields included in DCI born in the first four (E)PDCCHs to be '00' during a sending process.
For the terminal, in a case when the number of the PDSCHs(E)PDCCHs received is smaller than or equal to 4, if it is assumed that 4 PDSCHs/(E)PDCCHs are received, then the terminal cannot determine whether or not a DAI representing a counter is received, thus, the terminal carries out the following processing in the foregoing processing way 3:

(1) the determination of a number of fed-back HARQ-ACK bits: the terminal determines a number of fed-back HARQ-ACK bits according to the DAI in the first piece of DCI and the number of the PDSCHs/(E)PDCCHs currently received, the determination is made as follows: the terminal determines, by looking up Table 2, that a total DAI control field being '11' represents the total number of the PDSCHs/(E)PDCCHs received being 4, 8, 12, 16, 20, 24, 28, 32,...,128, determines that the smallest one of the values greater than the number of the PDSCHs/(E)PDCCHs currently received is 4, and therefore determines that the number of HARQ-ACK bits required to be fed back in the current subframe is 4.

(2) the determination of an HARQ-ACK feedback state: because the determined number of HARQ-ACK bits required to be fed back, that is, 4, is equal to the number of the PDSCHs/(E)PDCCHs received, that is, 4, the states corresponding to corresponding HARQ-ACK bit positions are determined to be ACK or NACK according to a preset order based on a detection result, as shown in FIG. 20.

Eleventh Embodiment

If CA serving cells include a TDD serving cell from which an HARQ-ACK is sent, then because of the asymmetry of uplink subframes and downlink subframes, it is required to feed back the HARQ-ACKs of a plurality of downlink subframes. In the tenth embodiment, the number of HARQ-ACK bits required to be fed back by each downlink subframe corresponding to an uplink subframe is determined first, and then a total number of bits required to be fed back is determined according to the number of HARQ-ACK bits each downlink subframe needs to feed back. A PUCCH format that can carry the determined number of HARQ-ACK bits is determined according to the determined number of HARQ-ACK bits.

A downlink subframe corresponding to an uplink subframe is determined according to a timing relationship that is defined in an existing protocol for a PDSCH and an HARQ-ACK, and this determination, which can be realized using an existing technology, is not described here repeatedly.

A CA serving cell includes a TDD serving cell, but is not limited to the following scenarios:

TDD serving cell aggregation having identical uplink and downlink configuration;

TDD serving cell aggregation having different uplink and downlink configurations;

a serving cell in which TDD and FDD are aggregated and which feeds back an HARQ-ACK is a TDD serving cell;

Additionally, the foregoing TDD serving cell may also be configured as an eIMTA enabler, that is, the uplink-downlink ratio of the TDD serving cell can change with time, eIMTA, which is an existing technology, is not described here repeatedly.

In still another embodiment, a piece of software is provided which is executed to realize the technical solutions described in the foregoing embodiments and preferred implementation modes.

In still another embodiment, a storage medium is also provided which includes, but is not limited to: an optical disk, a floppy disk, a hard disk and an erasable memory and on which the foregoing software is stored.

Apparently, it should be appreciated by those skilled in the art that each module or step described in the invention can be realized by a universal computer and that the modules or steps may be integrated on a single computer or distributed on a network consisting of a plurality of computers, optionally, the modules or steps may be realized by executable program codes so that the modules or steps can be stored in a memory to be executed by a computer, and in some cases, the steps shown or described herein can be executed in a sequence different from this presented herein, or the modules or steps are formed into integrated circuit modules, or several of the modules or steps are formed into integrated circuit modules. Therefore, the invention is not limited to the combination of specific hardware and software.

Although certain preferred embodiments of the invention have been described above, it should be appreciated that the preferred embodiments are not described for limiting the invention and that a variety of modifications and variations can be devised by those of ordinary skill in the art. Any modification, equivalent substitute and improvement that can be devised by those of ordinary skill in the art without departing from the spirit of the invention and that the modifications and improvements shall fall within the protection scope of the invention.

**INDUSTRIAL APPLICABILITY**

According to the invention, a terminal determines, according to the DCI sent by a base station, related parameter information which is required by the terminal for feeding back HARQ-ACK information (that is, DCI) and which includes the number of HARQ-ACK bits required to be fed back by the terminal, a PUCCH format for feeding back an HARQ-ACK and a PUCCH resource corresponding the PUCCH format, and sends the HARQ-ACK information to the base station, thus addressing the problem existing in the conventional art as to how can a terminal determine a PUCCH format for sending an HARQ-ACK when a new PUCCH format is introduced and filling related technological gaps.

**Claims**

1.  A method for sending uplink control information, comprising:

    receiving, by a terminal, Downlink Control Information (DCI) sent by a base station, wherein the DCI includes at least one of: a first control field for indicating information related to downlink scheduling, a second control field for indicating a Hybrid Automatic Repeat request Acknowledgement (HARQ-ACK) feedback mode determined by the terminal, and a third control field for indicating a Physical Uplink Control Channel (PUCCH) resource used by the terminal when the terminal determines to feed back an HARQ-ACK;
    determining, by the terminal according to the downlink control information, related parameter information required by the terminal when the terminal feeds back HARQ-ACK information, wherein the related parameter information includes: the number of HARQ-ACK bits, the PUCCH format of an HARQ-ACK and a PUCCH resource corresponding to the PUCCH format; and
    sending, by the terminal, the HARQ-ACK information to the base station.

2.  The method according to claim 1, wherein the PUCCH format includes a first preset PUCCH format and a second preset PUCCH format.

3.  The method according to claim 1, wherein

    for a Frequency Division Duplexing (FDD) system, the first control field is a Downlink Assignment Indicator (DAI) control field newly added in the control information, wherein the DAI control field is used to indicate the number of Physical Downlink Control Channels (PDCCHs)/Enhanced Physical Downlink Control Channel (EPDCCHs) with assigned PDSCH transmission(s) and PDCCHs/EPDCCHs indicating downlink SPS release which are already sent by the base station according to a first preset order; and
    for a Time Division Duplexing (TDD) system, the first control field is a DAI control field which is used to indicate the number of the PDCCHs/EPDCCHs with assigned PDSCH transmission(s) and PDCCHs/EPDCCHs indicating downlink SPS release which are already sent by the base station according to a second preset order.

4.  The method according to claim 1, wherein

    the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine the PUCCH format used by the terminal when the terminal feeds back the HARQ-ACK.

5.  The method according to claim 4, wherein in a case when the second control field is used to indicate the number of HARQ-ACKs required to be fed back by the terminal, the method further comprises:

    determining, by the terminal, the number of HARQ-ACKs required to be fed back by the terminal according to the maximum value of received Downlink Assignment Indicators (DAIs) or the number of received PDSCHs/(E)PDCCHs.

6.  The method according to claim 2, wherein the terminal and the base station agree that the second control field is a control field newly added in the DCI, and the second control field is used to indicate a PUCCH format used by the terminal when the terminal feeds back an HARQ-ACK, when the DCI received by the terminal includes: the first control field, and the second control field and the third control field, the method further comprises:

    determining, by the terminal according to the second control field, a PUCCH format used for feeding back an HARQ-ACK, and determining, according to the PUCCH format, the number of HARQ-ACK bits required to be fed back as a maximum number of bits that can be supported by the PUCCH format;
    determining, by the terminal, the PUCCH resource corresponding to the PUCCH format according to the third control field;
    sorting, by the terminal, HARQ-ACKs according to the received DAIs, determining according to the result of the sorting that a state corresponding to an HARQ-ACK bit position is ACK or NACK, and setting a state corresponding to an HARQ-ACK bit position where a corresponding PDSCH/(E)PDCCH is not received to be NACK; and
    sending, by the terminal, the HARQ-ACKs on the PUCCH resource corresponding to the PUCCH format.

7. The method according to claim 2, wherein the terminal and the base station agree that the second control field is a control field newly added in the DCI, and the second control field indicates the number of HARQ-ACKs required to be fed back by the terminal, when the DCI received by the terminal includes: the first control field, the second control field and the third control field, the method further comprises:

determining, by the terminal according to the second control field, the number of HARQ-ACK bits required to be fed back, and determining a PUCCH format that can carry the determined number of HARQ-ACK bits according to the determined number of HARQ-ACK bits;
determining, by the terminal, a PUCCH resource corresponding to the PUCCH format according to the third control field;
sorting, by the terminal, HARQ-ACKs according to the received DAIs, determining according to the result of the sorting that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the PUCCH format.

8. The method according to claim 2, wherein the terminal and the base station agree that the second control field is a TPC command control field of DCI of which the value of a Downlink Assignment Indicator (DAI) is greater than K and the value of the DAI is an odd number, the third control field is a TPC command control field of DCI of which the value of a DAI is greater than K and the value of the DAI is an even number, and the second control field is used to indicate a PUCCH format used by the terminal when the terminal feeds back an HARQ-ACK, when the DCI received by the terminal includes: the first control field, the second control field and the third control field, the method further comprises:

determining, by the terminal, a PUCCH format used for feeding back an HARQ-ACK according to the TPC command control field of DCI of which the value of a DAI is greater than K and the value of the DAI is an odd number, and determining, according to the PUCCH format, the number of HARQ-ACK bits required to be fed back as a maximum number of bits that can be supported by the PUCCH format;
determining, by the terminal, a PUCCH resource corresponding to the PUCCH format according to the TPC command control field of DCI of which the value of a DAI is greater than K and the value of the DAI is an even number;
sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the PUCCH format.

9. The method according to claim 2, wherein the terminal and the base station agree that the second control field is a TPC command control field of DCI of which the value of a DAI is greater than K and the value of the DAI is an odd number, the third control field is a TPC command control field of DCI of which the value of a DAI is greater than K and the value of the DAI is an even number, and the second control field is used to indicate a PUCCH format used by the terminal when the terminal feeds back an HARQ-ACK, when the terminal receives no second control field, and the maximum value of the DAIs included in DCI received by the terminal or the number of the PDSCHs/(E)PDCCHs received by the terminal is not above a first preset value, the method further comprises:

determining, by the terminal, that a PUCCH format used for feeding back an HARQ-ACK is the first preset PUCCH format and that the number of HARQ-ACK bits required to be fed back is a maximum number of HARQ-ACK bits that can be supported by the first preset PUCCH format;
determining, by the terminal, a PUCCH resource corresponding to the first preset PUCCH format according to a received TPC command control field for which the value of the DAI is an even number;
sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the first preset PUCCH format.

10. The method according to claim 2, wherein the terminal and the base station agree that the maximum value of the DAIs in the DCI received by the terminal or the number of the PDSCHs/(E)PDCCHs received by the terminal is greater than a second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, and the second control field is used to indicate a PUCCH format used by the terminal when the terminal feeds back an HARQ-ACK, when the DCI received by the terminal includes: the first, the second and the third control fields, and the maximum value of the DAIs included in DCI received by the terminal or the number of the PDSCHs/(E)PDCCHs received by the terminal is greater than the second preset value, the method further comprises:

determining, by the terminal, a PUCCH format used for feeding back an HARQ-ACK according to the TPC command control field of DCI of which the value of a DAI is greater than K and the value of the DAI is an odd number, and determining, by the terminal, according to the PUCCH format, that the number of HARQ-ACK bits required to be fed back is a maximum number of HARQ-ACK bits that can be supported by the PUCCH format;
determining, by the terminal, a PUCCH resource corresponding to the PUCCH format, according to the TPC command control field of DCI of which the value of a DAI is greater than K and the value of the DAI is an even number;
sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the PUCCH format.

11. The method according to claim 2, wherein the terminal and the base station agree that the maximum value of the DAIs in the DCI received by the terminal or the number of the PDSCHs/(E)PDCCHs received by the terminal is greater than the second preset value, the second control field is a TPC command control field of DCI of which the value of a DAI is greater than K and the value of the DAI is an odd number, the third control field is a TPC command control field of DCI of which the value of a DAI is greater than K and the value of the DAI is an even number, and the second control field is used to indicate the number of HARQ-ACKs required to be fed back by the terminal, when the DCI received by the terminal includes: the first, the second and the third control fields, and the maximum value of the DAIs in the DCI received by the terminal or the number of the PDSCHs/(E)PDCCHs received by the terminal is greater than the second preset value, the method further comprises:

determining, by the terminal, the number of HARQ-ACK bits required to be fed back according to a TPC command control field of DCI of which the value of a DAI is greater than K and the value of the DAI is an odd number, and determining a PUCCH format that can carry the determined number of HARQ-ACK bits according to the determined number of HARQ-ACK bits;
determining, by the terminal, a PUCCH resource corresponding to the PUCCH format according to the TPC command control field of DCI of which the value of the DAI is greater than K and the value of the DAI is an even number;
sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the PUCCH format.

12. The method according to claim 2, wherein the terminal and the base station agree that if the maximum value of the DAIs in the DCI received by the terminal or the number of the PDSCHs/(E)PDCCHs received by the terminal is smaller than or equal to the second preset value, a TPC command control field of DCI of which the value of a DAI is greater than K is the third control field, and the third control field is a resource indication control field for indicating the first preset PUCCH format, when the DCI received by the terminal includes a DAI control field, and the maximum value of the DAIs in the DCI received by the terminal or the number of the PDSCHs/(E)PDCCHs received by the terminal is smaller than or equal to the second preset value, the method further comprises:

determining, by the terminal, that a PUCCH used for feeding back an HARQ-ACK is the first preset PUCCH format and that the number of HARQ-ACK bits required to be fed back is a maximum number of HARQ-ACK bits that can be supported by the first preset PUCCH format;
determining, by the terminal, a PUCCH resource corresponding to the first preset PUCCH format according to a TPC command control field of DCI of which the value of a DAI is greater than K;

sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and

sending, by the terminal, the HARQ-ACKs on the PUCCH resource corresponding to the first preset PUCCH format.

13. The method according to claim 2, wherein the terminal and the base station agree that if the maximum value of the DAIs in the DCI received by the terminal or the number of the PDSCHs/(E)PDCCHs received by the terminal is smaller than or equal to a third preset value, a TPC command control field of DCI of which the value of a DAI is greater than K is the third control field, and the third control field is a resource indication control field for indicating the first preset PUCCH format; and agree that if the maximum value of the DAIs in the DCI received by the terminal or the number of the PDSCHs/(E)PDCCHs received by the terminal is greater than a fourth preset value, the TPC command control field in the DCI of which the value of a DAI is greater than K is the third control field, and the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is smaller than or equal to the third preset value, the method further comprises:

determining, by the terminal, that a PUCCH used for feeding back an HARQ-ACK is the first preset PUCCH format and that the number of HARQ-ACK bits required to be fed back is a maximum number of HARQ-ACK bits that can be supported by the first preset PUCCH format;
determining, by the terminal, a PUCCH resource corresponding to the first preset PUCCH format according to the TPC command control field of DCI of which the value of a DAI is greater than K;
sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the first preset PUCCH format.

14. The method according to claim 2, wherein the terminal and the base station agree that if the maximum value of the DAIs in the DCI received by the terminal or the number of the PDSCHs/(E)PDCCHs received by the terminal is smaller than or equal to the third preset value, the TPC command control field of DCI of which the value of a DAI is greater than K is the third control field, and the third control field is a resource indication control field for indicating the first preset PUCCH format; and agree that if the maximum value of the DAIs in the DCI received by the terminal or the number of the PDSCHs/(E)PDCCHs received by the terminal is greater than a fourth preset value, the TPC command control field in the DCI of which the value of a DAI is greater than K is the third control field, and the third control field is the resource indication control field of the second preset PUCCH format, when the DCI received by the terminal includes the first and the third control fields, and the maximum value of the DAIs in the DCI received by the terminal or the number of the PDSCHs/(E)PDCCHs received by the terminal is greater than the fourth preset value, the method further comprises:

determining, by the terminal, that a PUCCH format used for feeding back an HARQ-ACK is the second preset PUCCH format and that the number of HARQ-ACK bits required to be fed back is a maximum number of HARQ-ACK bits that can be supported by the second preset PUCCH format;
determining, by the terminal, a PUCCH resource corresponding to the second preset PUCCH format according to the TPC command control field of DCI of which the value of a DAI is greater than K;
sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and
sending, by the terminal, the HARQ-ACKs on the PUCCH resource corresponding to the second preset PUCCH format, wherein
K is a positive integer.

15. The method according to claim 1, wherein the terminal and the base station agree that a TPC command control field included in DCI of which the value of a DAI is greater than K is used to indicate a PUCCH format used for feeding back an HARQ-ACK and a resource corresponding to the PUCCH format, when the DCI received by the terminal includes: a DAI control field, and a TPC command control field for which the value of the DAI is greater than K, the method further comprises:

determining, by the terminal, a PUCCH format used for feeding back an HARQ-ACK according to the TPC command control field included in DCI of which the value of the DAI is greater than K and a PUCCH resource corresponding to the determined PUCCH format, and determining that the number of HARQ-ACK bits required to be fed back is a maximum number of HARQ-ACK bits that can be supported by the determined PUCCH format; sorting, by the terminal, HARQ-ACKs according to the received DAIs, determining, according to the result of the sorting, that a state corresponding to an HARQ-ACK bit position is ACK or NACK, and setting a state corresponding to an HARQ-ACK bit position where a corresponding PDSCH/(E)PDCCH is not received to be NACK; and sending, by the terminal, the HARQ-ACKs on the PUCCH resource corresponding to the determined PUCCH format, wherein K is a positive integer.

16. The method according to claim 1, wherein the terminal and the base station agree that when the DCI received by the terminal includes a DAI control field,

for an FDD system, the newly added DAI control fields are used to indicate, in the first N pieces of DCI, the number of serving cells scheduled in a current subframe according to a first preset order, and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order; and for a TDD system, the DAI control fields in a same subframe are used to indicate, in the first N pieces of DCI, the number of serving cells scheduled in the current subframe according to a preset order, and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order , wherein the values of the DAIs in the first N pieces of DCI are set to be the same.

17. The method according to claim 16, wherein the first preset order is an ascending order of indexes of the serving cells.

18. The method according to claim 16, wherein for each downlink subframe, the terminal determines whether or not the DAI control fields in the first (N+1) pieces of DCI received are the same, and if the DAI control fields in the first (N+1) pieces of DCI received are the same, the method further comprises:

determining, by the terminal, that no loss occurs to the first N pieces of DCI in the subframe; determining, by the terminal, the number of HARQ-ACK bits required to be fed back in the current subframe according to the DAIs in the first N pieces of DCI and the maximum value of the DAIs received in the current subframe or the number of the PDSCHs/(E)PDCCHs received in the current subframe, wherein the states of a first N HARQ-ACK feedback bit positions are set to be ACK or NACK according to the result of detection of the first N PDSCHs/(E)PDCCHs; sorting, by the terminal, HARQ-ACKs starting with the (N+1)th HARQ-ACK according to the received DAIs subsequent to the (N+1)th DAI, determining, according to the result of the sorting, a state corresponding to an HARQ-ACK bit position to be ACK or NACK, and setting a state corresponding to an HARQ-ACK bit position where a corresponding PDSCH/(E)PDCCH is not received to be NACK; and after determining the number of HARQ-ACK bits required to be fed back in each downlink subframe, determining, by the terminal, a total number of HARQ-ACK bits required to be fed back, and determining a PUCCH format that can carry the total number of HARQ-ACK bits according to the total number of HARQ-ACK bits.

19. The method according to claim 16, wherein for each downlink subframe, the terminal determines whether or not the DAI control fields in the first (N+1) pieces of DCI received are the same, and if not, the method further comprises:

in a case when the terminal determines that a loss occurs to the first N pieces of DCI in the subframe, determining, by the terminal, the number of HARQ-ACK bits required to be fed back in the current subframe according to the DAIs in the first N pieces of DCI and the maximum value of the DAIs received in the current subframe or the number of the PDSCHs/(E)PDCCHs received in the current subframe, wherein the states of the first N HARQ-ACK feedback bit positions are set to be NACK; sorting, by the terminal, HARQ-ACKs starting with the (N+1)th HARQ-ACK according to the received DAIs subsequent to the (N+1)th DAI, determining, according to the result of the sorting, a state corresponding to an HARQ-ACK bit position to be ACK or NACK, and setting a state corresponding to an HARQ-ACK bit position where a corresponding PDSCH/(E)PDCCH is not received to be NACK;

after determining the number of HARQ-ACK bits required to be fed back in each downlink subframe, determining, by the terminal, a total number of HARQ-ACK bits required to be fed back, and determining a PUCCH format that can carry the total number of HARQ-ACK bits according to the total number of HARQ-ACK bits;

determining, by the terminal, a PUCCH resource corresponding to the PUCCH format according to a TPC command control field of a secondary serving cell; and

sending, by the terminal, the HARQ-ACKs on the determined PUCCH resource corresponding to the PUCCH format.

20. The method according to claim 16, wherein for each downlink, when the number of PDCCHs bearing DCI, which are received by the terminal, is smaller than or equal to N, the method comprises:

determining, by the terminal, according to a DAI in the first piece of DCI and the number of PDSCHs/(E)PDCCHs currently received, the number of HARQ-ACK bits required to be fed back in the current subframe, setting all HARQ-ACK bits required to be fed back to be NACK if the determined number of HARQ-ACK bits required to be fed back is not equal to the number of the PDSCHs/(E)PDCCHs received, or

setting, according to a preset order, a state corresponding to an HARQ-ACK bit position to be ACK or NACK based on a detection result if the determined number of HARQ-ACK bits required to be fed back is equal to the number of the PDSCHs/(E)PDCCHs received;

after determining the number of HARQ-ACK bits required to be fed back in each downlink subframe, determining, by the terminal, a total number of HARQ-ACK bits required to be fed back and a PUCCH format that can carry the total number of HARQ-ACK bits according to the total number of HARQ-ACK bits;

determining, by the terminal, a PUCCH resource corresponding to the PUCCH format according to a TPC command control field of a secondary serving cell; and

sending, by the terminal, the HARQ-ACKs on the determined PUCCH resource corresponding to the PUCCH format.

21. A method for sending uplink control information, comprising:

sending, by a base station, Downlink Control Information (DCI) to a terminal, wherein the DCI includes at least one of: a first control field for indicating information related to downlink scheduling, a second control field for indicating a Hybrid Automatic Repeat request Acknowledgement (HARQ-ACK) feedback mode determined by the terminal, and a third control field for indicating a Physical Uplink Control Channel (PUCCH) resource used by the terminal when the terminal determines to feed back an HARQ-ACK; and

receiving, by the base station, HARQ-ACK information which is sent by the terminal in response to the DCI.

22. The method according to claim 21, wherein the second control field is used to indicate a PUCCH format used by the terminal when the terminal feeds back an HARQ-ACK or the number of HARQ-ACKs required to be fed back by the terminal, wherein the number of HARQ-ACKs is used for the terminal to determine the PUCCH format used by the terminal when the terminal feeds back the HARQ-ACK.

23. The method according to claim 21, wherein

for a Frequency Division Duplexing (FDD) system, the first control field is a DAI control field newly added in the control information, wherein the DAI control field is used to indicate the number of PDCCHs/EPDCCHs with assigned PDSCH transmission(s) and PDCCHs/EPDCCHs indicating downlink SPS release which are already sent by the base station according to a first preset order; and

for a Time Division Duplexing (TDD) system, the first control field is a DAI control field which is used to indicate the number of the PDCCHs/EPDCCHs with assigned PDSCH transmission(s) and PDCCHs/EPDCCHs indicating downlink SPS release which are already sent according to a second preset order.

24. The method according to claim 21, wherein

the second control field is a newly added control field, and the third control field is a Transit Power Control (TPC) command control field in the DCI of which the value of a Downlink Assignment Indicator (DAI) control field is greater than K; or

the second control field is a TPC command control field of DCI of which the value of the DAI control field is greater than K and the value is an odd number, and the third command control field is a TPC command control field of DCI of which the value of the DAI control field is greater than K and the value is an even number; or, the second control field is a TPC command control field of DCI of which the value of the DAI control field is greater than K and the value is an even number, and the third command control field is a TPC command control field of DCI of which the value of the DAI control field is greater than K and the value is an odd number, wherein the values of all second control fields are set to be the same, the values of all third control fields are also set to be the same, the values of the second control fields are different from those of the third control fields; or

in a case when the number of the PDSCHs/(E)PDCCHs scheduled by the base station in the current subframe is greater than a second preset value, the second control field is a TPC command control field of DCI of which the value of the DAI control field is greater than K and the value is an odd number, and the third control field is a TPC command control field of DCI of which the value of the DAI control field is greater than K and the value is an even number; or the second control field is a TPC command control field of DCI of which the value of the DAI control field is greater than K and the value is an even number, and the third control field is a TPC command control field of DCI of which the value of the DAI control field is greater than K and the value is an odd number, wherein the value of each second control field is also set to be the same, the value of each third control field is also set to be the same, the value of the second control field is different from that of the third control field; or

in a case when the number of the PDSCHs/(E)PDCCHs scheduled by the base station in the current subframe is smaller than or equal to a third preset value, the third control field is a TPC command control field in the DCI of which the value of the DAI control field is greater than K, and the base station and the terminal agree to use a first preset PUCCH format for feeding back an HARQ-ACK; or in a case when the number of the PDSCHs/(E)PDCCHs scheduled by the base station in the current subframe is greater than a fourth preset value, the third control field is a TPC command control field included in DCI of which the value of a DAI is greater than K, and the base station and the terminal agree to use a second preset PUCCH format for feeding back an HARQ-ACK, wherein the fourth preset value is greater than the third preset value, the values of all the third control fields are the same,

wherein K is a positive integer.

**25.** The method according to claim 21, wherein

the base station and the terminal agree on a PUCCH format and a PUCCH resource that are used by the terminal for feeding back an HARQ-ACK when a TPC command control field included in DCI of which the value of a DAI control field is greater than K indicates feedback of the HARQ-ACK by the terminal, wherein K is a positive integer.

**26.** The method according to claim 21, wherein

for an FDD system, the newly added DAI control field is used to indicate, in the first N pieces of DCI, the number of serving cells scheduled in the current subframe according to a preset order, and indicate, in the following pieces of DCI after the Nth DCI, the number of the PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells; and

for a TDD system, DAI control fields in a same subframe are used to indicate, in the first N pieces of DCI, the number of the serving cells scheduled in the current subframe according to a preset order and indicate, in the following pieces of DCI after the Nth DCI, the number of PDCCHs/EPDCCHs with assigned PDSCH transmission(s) and PDCCHs/EPDCCHs indicating downlink SPS release which are already sent by the base station according to the first preset order, wherein the preset order is an ascending order of indexes of the serving cells, and the values of the DAIs in the first N pieces of DCI are the same.

**27.** The method according to claim 21, wherein the third control field is a TCP command control field included in the downlink control information of a secondary serving cell, wherein the PUCCH resource is a specified PUCCH format or a new PUCCH format.

**28.** An apparatus for sending uplink control information, wherein the apparatus is located at the side of a terminal and comprises:

a first receiving module configured to receive Downlink Control Information (DCI) sent by a base station, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK;

a determination module configured to determine, according to the downlink control information, related parameter information required by the terminal when the terminal feeds back HARQ-ACK information, wherein the related parameter information includes: the number of HARQ-ACK bits, the PUCCH format of an HARQ-ACK and a PUCCH resource corresponding to the PUCCH format; and

a first sending module configured to send the HARQ-ACK information to the base station.

29. An apparatus for sending uplink control information, wherein the apparatus is located at the side of a base station and comprises:

a second sending module configured to send DCI to a terminal, wherein the DCI includes at least one of: a first control field for indicating information related to downlink scheduling, a second control field for indicating an HARQ-ACK feedback mode determined by the terminal, and a third control field for indicating a PUCCH resource used by the terminal when the terminal determines to feed back an HARQ-ACK; and

a second receiving module configured to receive HARQ-ACK information which is sent by the terminal in response to the DCI.

3-order time domain extension

12-order
frequency domain
extension

| D0 | D0 | RS | RS | RS | D0 | D0 |

4-order time domain
extension

3-order time domain extension

| D0 | D0 | RS | RS | RS | D0 | D0 |

4-order time domain
extension

| DX | OFDM symbols for bearing uplink control information |

| RS | OFDM symbols for bearing reference signals |

**FIG. 1**

12-order
frequency domain
extension

| D0 | RS | D1 | D2 | D3 | RS | D4 |
|----|----|----|----|----|----|----|

| D5 | RS | D6 | D7 | D8 | RS | D9 |
|----|----|----|----|----|----|----|

| DX | OFDM symbols for bearing uplink control information |
|----|----|

| RS | OFDM symbols for bearing reference signals |
|----|----|

**FIG. 2**

5-order time domain extension

| D0 | | D0 | D0 | D0 | | D0 |
| D1 | | D1 | D1 | D1 | | D1 |
| D2 | | D2 | D2 | D2 | | D2 |
| D3 | | D3 | D3 | D3 | | D3 |
| D4 | | D4 | D4 | D4 | | D4 |
| D5 | RS | D5 | D5 | D5 | RS | D5 |
| D6 | | D6 | D6 | D6 | | D6 |
| D7 | | D7 | D7 | D7 | | D7 |
| D8 | | D8 | D8 | D8 | | D8 |
| D9 | | D9 | D9 | D9 | | D9 |
| D10 | | D10 | D10 | D10 | | D10 |
| D11 | | D11 | D11 | D11 | | D11 |

5-order time domain extension

| D12 | | D12 | D12 | D12 | | D12 |
| D13 | | D13 | D13 | D13 | | D13 |
| D14 | | D14 | D14 | D14 | | D14 |
| D15 | | D15 | D15 | D15 | | D15 |
| D16 | | D16 | D16 | D16 | | D16 |
| D17 | RS | D17 | D17 | D17 | RS | D17 |
| D18 | | D18 | D18 | D18 | | D18 |
| D19 | | D19 | D19 | D19 | | D19 |
| D20 | | D20 | D20 | D20 | | D20 |
| D21 | | D21 | D21 | D21 | | D21 |
| D22 | | D22 | D22 | D22 | | D22 |
| D23 | | D23 | D23 | D23 | | D23 |

| DX | OFDM symbols for bearing uplink control information |

| RS | OFDM symbols for bearing reference signals |

**FIG. 3**

EP 3 297 193 A1

A terminal receives DCI sent by a base station ⟿S402

The terminal determines, according to downlink control information, related parameter information requried by the terminal when the terminal feeds back an HARQ-ACK ⟿S404

The terminal sends the HARQ-ACK information to the base station ⟿S406

**FIG. 4**

A base station sends DCI to a terminal — S502

The base station receives the HARQ-ACK information which is sent by the terminal as a response — S504

**FIG. 5**

```
┌─────────────────────────┐
│  First receiving module │
│            62           │
└─────────────────────────┘
            │
┌─────────────────────────┐
│  Determination module   │
│            64           │
└─────────────────────────┘
            │
┌─────────────────────────┐
│   First sending module  │
│            66           │
└─────────────────────────┘
```

**FIG. 6**

| Second sending module |
| :-: |
| 72 |

| Second receiving module |
| :-: |
| 74 |

**FIG. 7**

5-order time domain extension（OCC）

| D0 ~ D23 | RS RS | D0 ~ D23 | D0 ~ D23 | D0 ~ D23 | RS RS | D0 ~ D23 |
|---|---|---|---|---|---|---|

2PRB

5-order time domain extension（OCC）

| D24 ~ D47 | RS RS | D24 ~ D47 | D24 ~ D47 | D24 ~ D47 | RS RS | D24 ~ D47 |
|---|---|---|---|---|---|---|

**FIG. 8**

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 0 | 0 | 0 | 0 | 0 | 0 | 0 | 0 | 1 |
| 1 | 1 | 1 | 1 | 0 | 0 | 0 | 0 | 0 | 0 | 1 | 1 |
| 2 | 1 | 0 | 0 | 1 | 0 | 0 | 1 | 0 | 1 | 1 | 1 |
| 3 | 1 | 0 | 1 | 1 | 0 | 0 | 0 | 0 | 1 | 0 | 1 |
| 4 | 1 | 1 | 1 | 1 | 0 | 0 | 0 | 1 | 0 | 0 | 1 |
| 5 | 1 | 1 | 0 | 0 | 1 | 0 | 1 | 1 | 1 | 0 | 1 |
| 6 | 1 | 0 | 1 | 0 | 1 | 0 | 1 | 0 | 1 | 1 | 1 |
| 7 | 1 | 0 | 0 | 1 | 1 | 0 | 0 | 1 | 1 | 0 | 1 |
| 8 | 1 | 1 | 0 | 1 | 1 | 0 | 0 | 1 | 0 | 1 | 1 |
| 9 | 1 | 0 | 1 | 1 | 1 | 0 | 1 | 0 | 0 | 1 | 1 |
| 10 | 1 | 0 | 1 | 0 | 0 | 1 | 1 | 1 | 0 | 1 | 1 |
| 11 | 1 | 1 | 1 | 0 | 0 | 1 | 1 | 0 | 1 | 0 | 1 |
| 12 | 1 | 0 | 0 | 1 | 0 | 1 | 0 | 1 | 1 | 1 | 1 |
| 13 | 1 | 1 | 0 | 1 | 0 | 1 | 0 | 1 | 0 | 1 | 1 |
| 14 | 1 | 0 | 0 | 0 | 1 | 1 | 0 | 1 | 0 | 0 | 1 |
| 15 | 1 | 1 | 0 | 0 | 1 | 1 | 1 | 1 | 0 | 1 | 1 |
| 16 | 1 | 1 | 1 | 0 | 1 | 1 | 1 | 0 | 0 | 1 | 0 |
| 17 | 1 | 0 | 0 | 1 | 1 | 1 | 0 | 0 | 1 | 0 | 0 |
| 18 | 1 | 1 | 0 | 1 | 1 | 1 | 1 | 1 | 0 | 0 | 0 |
| 19 | 1 | 0 | 0 | 0 | 0 | 1 | 1 | 0 | 0 | 0 | 0 |
| 20 | 1 | 0 | 1 | 0 | 0 | 0 | 1 | 0 | 0 | 0 | 1 |
| 21 | 1 | 1 | 0 | 1 | 0 | 0 | 0 | 0 | 0 | 1 | 1 |
| 22 | 1 | 0 | 0 | 0 | 1 | 0 | 0 | 1 | 1 | 0 | 1 |
| 23 | 1 | 1 | 1 | 0 | 1 | 0 | 0 | 0 | 1 | 1 | 1 |
| 24 | 1 | 1 | 1 | 1 | 1 | 0 | 1 | 1 | 1 | 1 | 0 |
| 25 | 1 | 1 | 0 | 0 | 0 | 1 | 1 | 1 | 0 | 0 | 1 |
| 26 | 1 | 0 | 1 | 1 | 0 | 1 | 0 | 0 | 1 | 1 | 0 |
| 27 | 1 | 1 | 1 | 1 | 0 | 1 | 0 | 1 | 1 | 1 | 0 |
| 28 | 1 | 0 | 1 | 0 | 1 | 1 | 1 | 0 | 1 | 0 | 0 |
| 29 | 1 | 0 | 1 | 1 | 1 | 1 | 1 | 1 | 1 | 0 | 0 |
| 30 | 1 | 1 | 1 | 1 | 1 | 1 | 1 | 1 | 1 | 1 | 1 |
| 31 | 1 | 0 | 0 | 0 | 0 | 0 | 0 | 0 | 0 | 0 | 0 |

**FIG. 9**

Time domain

Frequency domain

| D | RS | D | D | D | RS | D |

| D | RS | D | D | D | RS | D |

| D | OFDM symbols for bearing uplink control information

| RS | OFDM symbols for bearing reference signals

**FIG. 10**

Time domain

Frequency domain

| D | D | D | RS | D | D |

| D | D | D | RS | D | D | D |

D — OFDM symbols for bearing uplink control information

RS — OFDM symbols for bearing reference signals

**FIG. 11**

HARQ-ACK
Bit block 0 → Rel-8 (32,O) Grouping codes+cyclically repeat → 48 encoding bits →

HAQR-ACK
Input bit → Signal source bit segmentation

HARQ-ACK
Bit block 1 → Rel-8 (32,O) Grouping codes+cyclically repeat → 48 encoding bits →

HARQ-ACK
Bit block 2 → Rel-8 (32,O) Grouping codes+cyclically repeat → 48 encoding bits →

→ Cascade → Scramble +modulate → Time domain extension → Transmission pre-exchange → Resource mapping →

**FIG. 12**

HARQ-ACK
Bit block 0 → | Rel-8 (32,O) Grouping codes+cyclically repeat | → 40 encoding bits

HARQ-ACK
Bit block 1 → | Rel-8 (32,O) Grouping codes+cyclically repeat | → 40 encoding bits

HARQ-ACK
Bit block 2 → | Rel-8 (32,O) Grouping codes+cyclically repeat | → 40 encoding bits

HAQR-ACK
Input bit → | Signal source bit segmentation |

HARQ-ACK
Bit block 3 → | Rel-8 (32,O) Grouping codes+cyclically repeat | → 40 encoding bits

HARQ-ACK
Bit block 4 → | Rel-8 (32,O) Grouping codes+cyclically repeat | → 40 encoding bits

HARQ-ACK
Bit block 5 → | Rel-8 (32,O) Grouping codes+cyclically repeat | → 40 encoding bits

Cascade - - - → Map

**FIG. 13**

**FIG. 14**

Frequency domain →

Configured serving cell (N=32)

| DAI=1 (00) | DAI=2 (01) | DAI=3 (10) | | DAI=4 (11) | DAI=5 (00) | DAI=6 (01) | | DAI=7 (10) | … | DAI=27 (10) | DAI=28 (11) |

**FIG. 15**

EP 3 297 193 A1

Frequency domain

Time domain

Configured serving cell（N=32）

| DAI=1 (00) | DAI=2 (01) | DAI=3 (10) | | DAI=4 (11) | DAI=5 (00) | DAI=6 (01) | | DAI=7 (10) | …… | DAI=27 (10) | DAI=28 (11) |
| DAI=29 (00) | DAI=30 (01) | DAI=31 (10) | | DAI=32 (11) | DAI=33 (00) | DAI=34 (01) | | DAI=35 (10) | …… | DAI=55 (10) | DAI=56 (11) |
| DAI=57 (00) | DAI=58 (01) | DAI=59 (10) | | DAI=60 (11) | DAI=61 (00) | DAI=62 (01) | | DAI=63 (10) | …… | | DAI=84 (11) |
| DAI=85 (00) | DAI=86 (01) | DAI=87 (10) | | DAI=88 (11) | DAI=89 (00) | DAI=90 (01) | | | …… | | DAI=100 (11) |

FIG. 16

FIG. 17

EP 3 297 193 A1

Carrier index →

| | DAI control field | 00 | 00 | 00 | 00 | 00 | 01 | 10 | 11 | | 00 | 01 | 10 | 11 | 00 | 01 | 10 | 11 | | 00 | | 01 | 10 | 11 | | 00 | 01 | 10 | 11 | | | 00 |
|---|---|---|---|---|---|---|---|---|---|---|---|---|---|---|---|---|---|---|---|---|---|---|---|---|---|---|---|---|---|---|---|---|
| Base station | V_DAI | 25 | 25 | 25 | 25 | 5 | 6 | 7 | 8 | | 9 | 10 | 11 | 12 | 13 | 14 | 15 | 16 | | 17 | | 18 | 19 | 20 | | 21 | 22 | 23 | 24 | | | 25 |

| | DAI control field | 00 | 00 | 00 | 00 | 00 | 01 | 10 | 11 | | 00 | 01 | 10 | 11 | 00 | 01 | 10 | 11 | | 00 | | 01 | 10 | 11 | | 00 | 01 | 10 | 11 | | | 00 |
|---|---|---|---|---|---|---|---|---|---|---|---|---|---|---|---|---|---|---|---|---|---|---|---|---|---|---|---|---|---|---|---|---|
| Terminal | V_DAI | 25 | 25 | 25 | 25 | 5 | 6 | 7 | 8 | | 9 | 10 | 11 | 12 | 13 | 14 | 15 | 16 | | 17 | | 18 | 19 | 20 | | 21 | 22 | 23 | 24 | | | 25 |

| HARQ-ACK | | | | | | | N | | | N | | | | N | | | | N | | | | | | | | | | | | | |
|---|---|---|---|---|---|---|---|---|---|---|---|---|---|---|---|---|---|---|---|---|---|---|---|---|---|---|---|---|---|---|---|
| HARQ-ACK index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 21 |

Corresponding to V_DAI-1

**FIG. 18**

Carrier index →

**Base station**

| DAI control field | 00 | 00 | 00 | 00 | 00 | 01 | 10 | 11 | | 00 | 01 | 10 | 11 | 00 | 01 | 10 | 11 | | 00 | | 01 | 10 | 11 | | 00 | 01 | 10 | 11 | | | 00 |
|---|---|---|---|---|---|---|---|---|---|---|---|---|---|---|---|---|---|---|---|---|---|---|---|---|---|---|---|---|---|---|---|
| V_DAI | 25 | 25 | 25 | 25 | 5 | 6 | 7 | 8 | | 9 | 10 | 11 | 12 | 13 | 14 | 15 | 16 | | 17 | | 18 | 19 | 20 | | 21 | 22 | 23 | 24 | | | 25 |

**Terminal**

| DAI control field | 00 | 00 | 00 | 00 | 00 | 01 | 10 | 11 | | 00 | 01 | 10 | 11 | 00 | 01 | 10 | 11 | | 00 | | 01 | 10 | 11 | | 00 | 01 | 10 | 11 | | | 00 |
|---|---|---|---|---|---|---|---|---|---|---|---|---|---|---|---|---|---|---|---|---|---|---|---|---|---|---|---|---|---|---|---|
| V_DAI | 25 | 25 | 25 | 25 | 5 | 6 | 7 | 8 | | 9 | 10 | 11 | 12 | 13 | 14 | 15 | 16 | | 17 | | 18 | 19 | 20 | | 21 | 22 | 23 | 24 | | | 25 |

| HARQ-ACK | N | N | N | N | N | | N | | N | | N | | | N | | | | N | | | | N | | | |
|---|---|---|---|---|---|---|---|---|---|---|---|---|---|---|---|---|---|---|---|---|---|---|---|---|---|
| HARQ-ACK index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 21 |

Corresponding to V_DAI-1

**FIG. 19**

EP 3 297 193 A1

FIG. 20

FIG. 21

**FIG. 22**

Carrier index →

| | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|

Base station — DAI control field: 00 | 00 | 00 | 00 | 00

V_DAI: 5 | 5 | 5 | 5 | 5

Terminal — DAI control field: 00 | 00 | 00 | 00 | 00

V_DAI: 5 | 5 | 5 | 5 | 5

↓ ↓ ↓ ↓ ↓

HARQ-ACK: N | N | N | N | N

HARQ-ACK index: 0 | 1 | 2 | 3 | 4

**FIG. 23**

EP 3 297 193 A1

Carrier index →

Base station — DAI control field / V_DAI

| 11 | 11 | 11 | 11 |
|---|---|---|---|
| 4 | 4 | 4 | 4 |

Terminal — DAI control field / V_DAI

| 00 | 00 | 00 | 00 |
|---|---|---|---|
| 4 | 4 | 4 | 4 |

HARQ-ACK

HARQ-ACK index

| 0 | 1 | 2 | 3 |
|---|---|---|---|

**FIG. 24**

# INTERNATIONAL SEARCH REPORT

| International application No. |
| --- |
| PCT/CN2016/074478 |

## A. CLASSIFICATION OF SUBJECT MATTER

H04L 1/00 (2006.01) i, H04L 1/18 (2006.01) i

According to International Patent Classification (IPC) or to both national classification and IPC

## B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CPRSABS; CNTXT; CNKI; VEN; USTXT; WOTXT; EPTXT: HARQ, channel, PUCCH, PDCCH, ACK, DCI, DAI, PUSCH, bit, physical uplink control channel, acknowledgement, downlink control information, mode, format, TPC, transmission power control, SPS, response, feedback, downlink semi-persistent scheduling

## C. DOCUMENTS CONSIDERED TO BE RELEVANT

| Category* | Citation of document, with indication, where appropriate, of the relevant passages | Relevant to claim No. |
| --- | --- | --- |
| X | CN 103875259 A (BLACKBERRY LTD.) 18 June 2014 (18.06.2014) claims 1 and 2, description, paragraphs [0022]-[0050], paragraphs [0120]-[0122], and figure 6 | 1-5, 21-23, 27-29 |
| A | CN 103875259 A (BLACKBERRY LTD.) 18 June 2014 (18.06.2014) the whole document | 6-20, 24-26 |
| A | CN 102223219 A (ZTE CORP.) 19 October 2011 (19.10.2011) the whole document | 1-29 |
| A | WO 2013027963 A2 (LG ELECTRONICS INC et al.) 28 February 2013 (28.02.2013) the whole document | 1-29 |

☐ Further documents are listed in the continuation of Box C.     ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 May 2016 | 16 May 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>FAN, Wenjing<br><br>Telephone No. (86-10) 62411255 |

Form PCT/ISA/210 (second sheet) (July 2009)

72

## INTERNATIONAL SEARCH REPORT
Information on patent family members

International application No.

PCT/CN2016/074478

| Patent Documents referred in the Report | Publication Date | Patent Family | Publication Date |
|---|---|---|---|
| CN 103875259 A | 18 June 2014 | EP 2696526 A2 | 12 February 2014 |
| | | EP 2696526 A3 | 06 January 2016 |
| | | US 2013039290 A1 | 14 February 2013 |
| CN 102223219 A | 19 October 2011 | WO 2012171413 A1 | 20 December 2012 |
| WO 2013027963 A2 | 28 February 2013 | KR 20140057335 A | 12 May 2014 |
| | | WO 2013027963 A3 | 10 May 2013 |
| | | US 2014219202 A1 | 07 August 2014 |

Form PCT/ISA /210 (patent family annex) (July 2009)